# EUROPEAN PATENT APPLICATION

(11) **EP 2 255 854 A2**
(43) Date of publication of application: **01.12.2010**
(21) Application number: 10158012.4
(22) Date of filing: 26.03.2010
(51) Int. Cl.: A63F 13/10

(54) **Image generation system, image generation method, and computer program product**

(30) Priority: 29.05.2009 JP 2009131364
(71) Applicant: NAMCO BANDAI Games Inc., Shinagawa-ku Tokyo 140-8590 (JP)
(72) Inventor: Yonemori, Yuuichi, Shinagawa-ku Tokyo 140-8590 (JP); Nakabayashi, Yasuki, Shinagawa-ku Tokyo 140-8590 (JP); Masukawa, Satoshi, Shinagawa-ku Tokyo 140-8590 (JP); Kudo, Kei, Shinagawa-ku Tokyo 140-8590 (JP); Yamamoto, Haruyoshi, Shinagawa-ku Tokyo 140-8590 (JP); Ozaki, Kenji, Shinagawa-ku Tokyo 140-8590 (JP)
(74) Representative: Emerson, Peter James

(57) **Abstract**

An image generation system includes a character control section, a virtual camera control section, an image generation section, and a motion mode switch section. The motion mode switch section switches a motion mode of a character from a free-move mode to a battle mode when an encounter event between the character and another character has occurred in the free-move mode, the free-move mode being a mode in which the character moves on a field in an object space, and the battle mode being a mode in which the character battles the other character. The character control section moves the character on the field in a direction indicated by direction instruction information from a direction instruction section of an operation section in the free-move mode, and causes the character to make a battle motion indicated by the direction instruction information from the direction instruction section in the battle mode.

## Description

### BACKGROUND

The present invention relates to an image generation system, an image generation method, a computer program product, etc.

An image generation system (game system) that generates an image viewed from a virtual camera (given viewpoint) in an object space (virtual three-dimensional space) in which an object (e.g., character) is disposed, has been known. Such an image generation system is very popular as a system that allows experience of virtual reality. For example, such an image generation system allows the player to enjoy a fighting game by operating a character (model object) using an operation section (game controller) to battle another character (enemy character) operated by another player or a computer. JP-A-8-84859 discloses a related-art image generation system, for example.

It is desirable that the fighting game implemented by such an image generation system provide the player with various play modes in addition to a normal battle mode (i.e., the character confronts and battles another character) in order to prompt the player to repeatedly play the game.

A fighting game may be made into a series. In this case, it is desirable that the same character operation method and the like be employed in the series.

Therefore, a system that follows the previous operation method while providing various play modes is desired.

### SUMMARY

According to one aspect of the invention, there is provided an image generation system comprising:
a character control section that controls a character based on operation information from an operation section;
a virtual camera control section that controls a virtual camera;
an image generation section that generates an image viewed from the virtual camera in an object space; and
a motion mode switch section that switches a motion mode of the character,
the motion mode switch section switching the motion mode of the character from a free-move mode to a battle mode when an encounter event between the character and another character has occurred in the free-move mode, the free-move mode being a mode in which the character moves on a field in the object space, and the battle mode being a mode in which the character battles the other character; and
the character control section moving the character on the field in a direction indicated by direction instruction information from a direction instruction section of the operation section in the free-move mode, and causing the character to make a battle motion indicated by the direction instruction information from the direction instruction section in the battle mode.

According to another aspect of the invention, there is provided an image generation system comprising:
a character control section that controls a character based on operation information from an operation section;
a virtual camera control section that controls a virtual camera;
an image generation section that generates an image viewed from the virtual camera in an object space; and
a motion mode switch section that switches a motion mode of the character,
the motion mode switch section switching the motion mode of the character from a free-move mode to a battle mode when an encounter event between the character and another character has occurred in the free-move mode, the free-move mode being a mode in which the character moves on a field in the object space, and the battle mode being a mode in which the character battles the other character; and
the virtual camera control section performing a free-move mode camera control process in the free-move mode, and performing a battle mode camera control process in the battle mode,
the virtual camera control section setting a direction of a line-of-sight line that connects a target point and the character to be a target line-of-sight direction of the virtual camera when the virtual camera control section performs the free-move mode camera control process, and
the virtual camera control section setting a direction of a line-of-sight line that diagonally intersects a connection line that connects the character and the other character to be a target line-of-sight direction of the virtual camera when the virtual camera control section performs the battle mode camera control process.

According to another aspect of the invention, there is provided an image generation method comprising:
controlling a character based on operation information from an operation section;
controlling a virtual camera to generate an image viewed from the virtual camera in an object space;
switching a motion mode of the character from a free-move mode to a battle mode when an encounter event between the character and another character has occurred in the free-move mode, the free-move mode being a mode in which the character moves on a field in the object space, and the battle mode being a mode in which the character battles the other character;
moving the character on the field in a direction indicated by direction instruction information from a direction instruction section of the operation section in the free-move mode; and
causing the character to make a battle motion indicated by the direction instruction information from the direction instruction section in the battle mode.

According to another aspect of the invention, there is provided an image generation method comprising:
controlling a character based on operation information from an operation section;
controlling a virtual camera to generate an image viewed from the virtual camera in an object space;
switching a motion mode of the character from a free-move mode to a battle mode when an encounter event between the character and another character has occurred in the free-move mode, the free-move mode being a mode in which the character moves on a field in the object space, and the battle mode being a mode in which the character battles the other character;
performing a free-move mode camera control process in the free-move mode, and performing a battle mode camera control process in the battle mode;
setting a direction of a line-of-sight line that connects a target point and the character to be a target line-of-sight direction of the virtual camera when performing the free-move mode camera control process; and
setting a direction of a line-of-sight line that diagonally intersects a connection line that connects the character and the other character to be a target line-of-sight direction of the virtual camera when performing the battle mode camera control process.

According to another aspect of the invention, there is provided a computer program product storing a program code that causes a computer to execute the above information generation method.

### BRIEF DESCRIPTION OF THE DRAWINGS

FIG. 1 shows a configuration example of an information generation system according to one embodiment of the invention.
FIGS. 2A and 2B show examples of a game image that is generated according to one embodiment of the invention in a free-move mode.
FIG. 3 shows an example of a game image that is generated according to one embodiment of the invention in a free-move mode.
FIGS. 4A and 4B show examples of a game image that is generated according to one embodiment of the invention in a battle mode.
FIG. 5 shows an example of a game image that is generated according to one embodiment of the invention in a battle mode.
FIG. 6 shows an example of an operation section used in one embodiment of the invention.
FIGS. 7A and 7B show other examples of an operation section.
FIG. 8 is a view illustrative of a free-move mode according to one embodiment of the invention.
FIG. 9 is a view illustrative of a battle mode according to one embodiment of the invention.
FIG. 10 is a view illustrative of the summary of a free-move mode and a battle mode.
FIGS. 11A and 11B are views illustrative of a method of switching a motion mode between a free-move mode and a battle mode.
FIG. 12 is a view illustrative of a first target character selection method.
FIG. 13 is a view illustrative of a second target character selection method.
FIGS. 14A and 14B show examples of a game image that is generated according to one embodiment of the invention when a target character is selected by the first selection method.
FIG. 15 shows an example of a game image that is generated according to one embodiment of the invention when a target character is selected by the first selection method.
FIGS. 16A and 16B show examples of a game image that is generated according to one embodiment of the invention when a target character is selected by the second selection method.
FIG. 17 shows an example of a game image that is generated according to one embodiment of the invention when a target character is selected by the second selection method.
FIGS. 18A and 18B are views illustrative of a free-move mode camera control method.
FIGS. 19A and 19B are views illustrative of a battle mode camera control method.
FIGS. 20A and 20B are views illustrative of a battle mode camera control method.
FIGS. 21A and 21B show examples of a game image that is generated according to one embodiment of the invention when a camera is controlled by the battle mode camera control method.
FIG. 22 shows an example of a game image that is generated according to one embodiment of the invention when a camera is controlled by the battle mode camera control method.
FIG. 23 is a flowchart illustrative of an example of a specific process according to one embodiment of the invention.
FIG. 24 is a flowchart illustrative of an example of a specific process according to one embodiment of the invention.
FIG. 25 is a flowchart illustrative of an example of a specific process according to one embodiment of the invention.

### DESCRIPTION OF EXEMPLARY EMBODIMENTS

Several aspects of the invention may provide an image generation system, an image generation method, a computer program product, etc, that can implement play modes that include a free-move mode and a battle mode.

According to one embodiment of the invention, there is provided an image generation system comprising:
a character control section that controls a character based on operation information from an operation section;
a virtual camera control section that controls a virtual camera;
an image generation section that generates an image viewed from the virtual camera in an object space; and
a motion mode switch section that switches a motion mode of the character,
the motion mode switch section switching the motion mode of the character from a free-move mode to a battle mode when an encounter event between the character and another character has occurred in the free-move mode, the free-move mode being a mode in which the character moves on a field in the object space, and the battle mode being a mode in which the character battles the other character; and
the character control section moving the character on the field in a direction indicated by direction instruction information from a direction instruction section of the operation section in the free-move mode, and causing the character to make a battle motion indicated by the direction instruction information from the direction instruction section in the battle mode.

According to this embodiment, when the encounter event between the character and another character has occurred in the free-move mode, the motion mode of the character is switched from the free-move mode to the battle mode. The character moves in the direction indicated by the direction instruction information from the direction instruction section in the free-move mode, while the character makes a battle motion indicated by the direction instruction information from the direction instruction section in the battle mode. Therefore, the direction instruction section functions as a character moving direction instruction section in the free-move mode, and functions as a character battle motion instruction section in the battle mode. This makes it possible to implement play modes that include the free-move mode and the battle mode while improving the operation interface environment of the player, for example.

In the image generation system,
the character control section may move the character in a direction indicated by a direction instruction operation even in the battle mode when a given direction instruction operation has been performed using the operation section in the battle mode.

According to this configuration, even when the motion mode has been switched from the free-move mode to the battle mode, the character can be moved in the direction indicated by the given direction instruction operation.

In the image generation system,
the operation section may include a second direction instruction section; and
the character control section may move the character in a direction indicated by direction instruction information from the second direction instruction section even in the battle mode when the second direction instruction section has been operated in the battle mode.

According to this configuration, even when the motion mode has been switched from the free-move mode to the battle mode, the character can be moved in the direction indicated by the direction instruction information from the second direction instruction section.

In the image generation system,
the character control section may move the character in a direction indicated by the direction instruction information from the second direction instruction section when the second direction instruction section has been operated in the free-move mode.

According to this configuration, the character can be moved in the instructed (indicated) direction in the free-move mode by utilizing the second direction instruction section that enables the movement of the character in the instructed direction in the battle mode.

In the image generation system,
the operation section may include an operation switch section; and
the character control section may move the character in a direction indicated by the direction instruction information from the direction instruction section in the battle mode when the direction instruction section has been operated in the battle mode in a state in which the operation switch section is operated.

According to this configuration, even when the motion mode has been switched from the free-move mode to the battle mode, the character can be moved in the direction indicated by the direction instruction information from the direction instruction section by operating the direction instruction section while operating the operation switch section.

In the image generation system,
the character control section may control the character so that a moving speed of the character when the direction instruction operation has been performed in the battle mode is lower than the moving speed of the character in the free-move mode.

According to this configuration, the character can be moved at a high moving speed over a large field in the free-move mode. On the other hand, the character can be moved at a low moving speed in the battle mode to battle another character.

In the image generation system,
the character control section may set the character to a given motion state when the motion mode has been switched to the battle mode after the character has been set to a running state for a period equal to or longer than a given period in the free-move mode.

According to this configuration, since the character is set to the given motion state when the motion mode has been switched to the battle mode from the free-move mode in which the character has been set to a running state for a period equal to or longer than a given period, a situation in which the character makes an unintentional motion can be prevented, for example.

In the image generation system,
the character control section may set the character to a special running state as the given motion state, the character not making a jump motion when the character is set to the special running state.

According to this configuration, since the character is set to the special running state in which the character does not make a jump motion when the motion mode has been switched from the free-move mode to the battle mode, a situation in which the character makes an unintentional jump motion or the like can be prevented.

In the image generation system,
the character control section may set the character to a running stop state as the given motion state.

According to this configuration, since the character is set to the running stop state when the motion mode has been switched from the free-move mode to the battle mode, the character can be caused to battle another character after stopping the running state of the character in the free-move mode, for example.

In the image generation system,
the character control section may cause the character to make the battle motion indicated by the direction instruction information from the direction instruction section after the character has been set to the given motion state.

According to this configuration, when the motion mode has been switched from the free-move mode to the battle mode, the character is set to the given motion state, and then caused to make a battle motion indicated using the direction instruction section.

In the image generation system,
the character control section may cause the character to make a motion other than a jump motion in the battle mode even if the direction instruction information from the direction instruction section indicates the jump motion, when a distance between the character and the other character as a target is equal to or longer than a given distance.

This prevents a situation in which the character makes an unintentional jump motion when the other character is positioned away from the character, for example.

In the image generation system,
the character control section may cause the character to make a guard motion as the battle motion in the battle mode.

The player can thus enjoy the game in the battle mode while instructing the guard motion as the battle motion.

In the image generation system,
the character control section may cause the character to make at least one of a forward motion, a backward motion, a jump motion, and a squat motion as the battle motion in the battle mode.

The player can thus enjoy the game in the battle mode while instructing at least one of the forward motion, the backward motion, the jump motion, and the squat motion as the battle motion.

In the image generation system,
the motion mode switch section may switch the motion mode of the character from the free-move mode to the battle mode when the other character has entered a character area set for the character.

According to this configuration, when the character has moved in the field in the free-move mode so that the other character has entered the character area, the motion mode can be switched from the free-move mode to the battle mode so that the character can battle the other character.

The image generation system may further comprise:
a target character selection section that selects a target character that is an attack target from a plurality of other characters that are positioned within the character area.

According to this configuration, when a plurality of other characters are positioned within the character area, the character can battle the target character selected from the plurality of other characters.

In the image generation system,
the target character selection section may alternately select another character that is positioned closest to the character and yet another character that is positioned second closest to the character as the target character when a target switch section of the operation section has been operated.

According to this configuration, another character that is positioned closest to the character and yet another character that is positioned second closest to the character can be alternately selected as the target character, and the character can be caused to battle the target character.

In the image generation system,
the operation section may include a second direction instruction section;
the character control section may move the character in a direction indicated by direction instruction information from the second direction instruction section even in the battle mode when the second direction instruction section has been operated in the battle mode; and
the target character selection section may select another character that is positioned within a direction range that includes a direction indicated by the direction instruction information from the second direction instruction section as the target character.

According to this configuration, the character can be moved in the direction indicated by the second direction instruction section in the battle mode, and another character that is positioned within the direction range that includes the direction indicated by the direction instruction information from the second direction instruction section can be selected as the target character.

In the image generation system,
the virtual camera control section may perform a free-move mode camera control process in the free-move mode, and performing a battle mode camera control process in the battle mode.

According to this configuration, the virtual camera can be controlled so that the player can smoothly play the game in each mode, even when the play modes include the free-move mode and the battle mode.

In the image generation system,
the virtual camera control section may set a direction of a line-of-sight line that connects a target point and the character to be a target line-of-sight direction of the virtual camera when the virtual camera control section performs the free-move mode camera control process.

According to this configuration, since the virtual camera can be controlled so that the line-of-sight direction of the virtual camera aims at the target point, even when the player moves the character in the free-move mode, the character can be guided to the target point, for example.

In the image generation system,
the virtual camera control section may set a position along the line-of-sight line at which the character is included within a field of view to be a target viewpoint position of the virtual camera when the virtual camera control section performs the free-move mode camera control process.

According to this configuration, it is possible to generate an image in which the line-of-sight direction of the virtual camera aims at the target point, and the viewpoint position of the virtual camera is set so that the character is included in the field of view.

In the image generation system,
the virtual camera control section may set a direction of a line-of-sight line that diagonally intersects a connection line that connects the character and the other character to be a target line-of-sight direction of the virtual camera when the virtual camera control section performs the battle mode camera control process.

According to this configuration, it is possible to generate an image in which the character and the other character are observed diagonally as a battle image of the character and the other character.

In the image generation system,
the virtual camera control section may set a position along the line-of-sight line at which the character and the other character are included within a field of view to be a target viewpoint position of the virtual camera when the virtual camera control section performs the battle mode camera control process.

According to this configuration, it is possible to generate an image in which the character and the other character are observed diagonally and included in the field of view as a battle image of the character and the other character.

In the image generation system,
the virtual camera control section may determine whether the virtual camera is positioned in a first area or a second area when an encounter event between the character and the other character has occurred, the first area and the second area being defined by the connection line that connects the character and the other character,
the virtual camera control section may set the direction of the line-of-sight line that diagonally intersects the connection line in the first area to be the target line-of-sight direction of the virtual camera when the virtual camera is positioned in the first area when the encounter event has occurred, and
the virtual camera control section may set the direction of the line-of-sight line that diagonally intersects the connection line in the second area to be the target line-of-sight direction of the virtual camera when the virtual camera is positioned in the second area when the encounter event has occurred.

According to this configuration, the rotation angle of the virtual camera required to generate the battle image can be reduced, so that the time required to generate the battle image can be reduced while suppressing rapid rotation of the direction of the virtual camera.

According to another embodiment of the invention, there is provided an image generation system comprising:
a character control section that controls a character based on operation information from an operation section;
a virtual camera control section that controls a virtual camera;
an image generation section that generates an image viewed from the virtual camera in an object space; and
a motion mode switch section that switches a motion mode of the character,
the motion mode switch section switching the motion mode of the character from a free-move mode to a battle mode when an encounter event between the character and another character has occurred in the free-move mode, the free-move mode being a mode in which the character moves on a field in the object space, and the battle mode being a mode in which the character battles the other character; and
the virtual camera control section performing a free-move mode camera control process in the free-move mode, and performing a battle mode camera control process in the battle mode,
the virtual camera control section setting a direction of a line-of-sight line that connects a target point and the character to be a target line-of-sight direction of the virtual camera when the virtual camera control section performs the free-move mode camera control process, and
the virtual camera control section setting a direction of a line-of-sight line that diagonally intersects a connection line that connects the character and the other character to be a target line-of-sight direction of the virtual camera when the virtual camera control section performs the battle mode camera control process.

According to this embodiment, when the encounter event between the character and another character has occurred in the free-move mode, the motion mode of the character is switched from the free-move mode to the battle mode. In the free-move mode, the direction of the line-of-sight line that connects the target point and the character is set to be the target line-of-sight direction of the virtual camera. In the battle mode, the direction of the line-of-sight line that diagonally intersects the connection line that connects the character and the other character is set to be the target line-of-sight direction of the virtual camera. Therefore, the virtual camera can be controlled so that the player can smoothly play the game in each mode, even when the play modes include the free-move mode and the battle mode.

According to another embodiment of the invention, there is provided an image generation method comprising:
controlling a character based on operation information from an operation section;
controlling a virtual camera to generate an image viewed from the virtual camera in an object space;
switching a motion mode of the character from a free-move mode to a battle mode when an encounter event between the character and another character has occurred in the free-move mode, the free-move mode being a mode in which the character moves on a field in the object space, and the battle mode being a mode in which the character battles the other character;
moving the character on the field in a direction indicated by direction instruction information from a direction instruction section of the operation section in the free-move mode; and
causing the character to make a battle motion indicated by the direction instruction information from the direction instruction section in the battle mode.

According to another embodiment of the invention, there is provided an image generation method comprising:
controlling a character based on operation information from an operation section;
controlling a virtual camera to generate an image viewed from the virtual camera in an object space;
switching a motion mode of the character from a free-move mode to a battle mode when an encounter event between the character and another character has occurred in the free-move mode, the free-move mode being a mode in which the character moves on a field in the object space, and the battle mode being a mode in which the character battles the other character;
performing a free-move mode camera control process in the free-move mode, and performing a battle mode camera control process in the battle mode;
setting a direction of a line-of-sight line that connects a target point and the character to be a target line-of-sight direction of the virtual camera when performing the free-move mode camera control process; and
setting a direction of a line-of-sight line that diagonally intersects a connection line that connects the character and the other character to be a target line-of-sight direction of the virtual camera when performing the battle mode camera control process.

According to another embodiment of the invention, there is provided a computer program product storing a program code that causes a computer to execute the above information generation method.

The term "computer program product" refers to an information storage medium, a device, an instrument, a system, or the like that stores a program code, such as an information storage medium (e.g., optical disk medium (e.g., DVD), hard disk medium, and memory medium) that stores a program code, a computer that stores a program code, or an Internet system (e.g., a system including a server and a client terminal), for example. In this case, each element or each process according to the above embodiments is implemented by the corresponding module, and a program code that includes each module is recorded in the computer program product.

Embodiments of the invention are described below. Note that the following embodiments do not in any way limit the scope of the invention laid out in the claims. Note that all elements of the following embodiments should not necessarily be taken as essential requirements for the invention.

### 1. Configuration

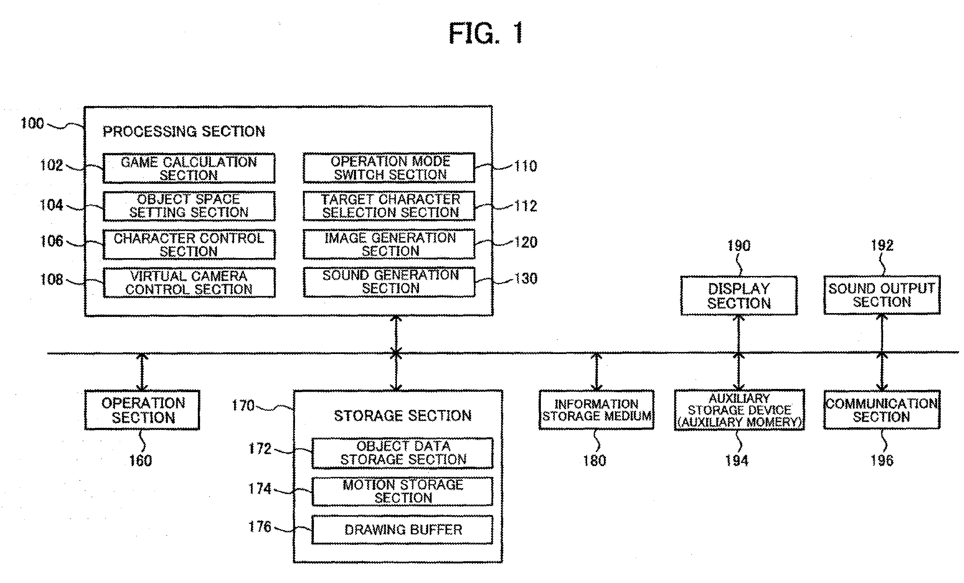

FIG. 1 shows an example of a block diagram of an image generation system (game system) according to one embodiment of the invention. Note that the image generation system according to this embodiment may have a configuration in which some of the elements (sections) shown in FIG. 1 are omitted.

An operation section 160 allows the player to input operation data. The function of the operation section 160 may be implemented by a direction instruction key, an operation button, an analog stick, a lever, a sensor (e.g., angular velocity sensor or acceleration sensor), a microphone, a touch panel display, or the like.

A storage section 170 serves as a work area for a processing section 100, a communication section 196, and the like. The function of the storage section 170 may be implemented by a RAM (DRAM or VRAM) or the like. A game program and game data necessary when executing the game program are stored in the storage section 170.

An information storage medium 180 (computer-readable medium) stores a program, data, and the like. The function of the information storage medium 180 may be implemented by an optical disk (CD or DVD), a hard disk drive (HDD), a memory (e.g., ROM), or the like. The processing section 100 performs various processes according to this embodiment based on a program (data) stored in the information storage medium 180. Specifically, a program that causes a computer (i.e., a device including an operation section, a processing section, a storage section, and an output section) to function as each section according to this embodiment (i.e., a program that causes a computer to execute the process of each section) is stored in the information storage medium 180.

A display section 190 outputs an image generated according to this embodiment. The function of the display section 190 may be implemented by an LCD, an organic EL display, a CRT, a touch panel display, a head mount display (HMD), or the like. A sound output section 192 outputs sound generated according to this embodiment. The function of the sound output section 192 may be implemented by a speaker, a headphone, or the like.

An auxiliary storage device 194 (auxiliary memory or secondary memory) is a storage device used to supplement the capacity of the storage section 170. The auxiliary storage device 194 may be implemented by a memory card such as an SD memory card or a multimedia card, or the like.

The communication section 196 communicates with the outside (e.g., another image generation system, a server, or a host device) via a cable or wireless network. The function of the communication section 196 may be implemented by hardware such as a communication ASIC or a communication processor or communication firmware.

A program (data) that causes a computer to function as each section according to this embodiment may be distributed to the information storage medium 180 (or the storage section 170 or the auxiliary storage device 194) from an information storage medium of a server (host device) via a network and the communication section 196. Use of the information storage medium of the server (host device) is also included within the scope of the invention.

The processing section 100 (processor) performs a game process, an image generation process, a sound generation process, and the like based on operation data from the operation section 160, a program, and the like. The processing section 100 performs various processes using the storage section 170 as a work area. The function of the processing section 100 may be implemented by hardware such as a processor (e.g., CPU or GPU) or ASIC (e.g., gate array) or a program.

The processing section 100 includes a game calculation section 102, an object space setting section 104, a character control section 106, a virtual camera control section 108, a motion mode switch section 110, a target character selection section 112, an image generation section 120, and a sound generation section 130. Note that various modifications may be made, such as omitting some of these elements or adding other elements.

The game calculation section 102 performs a game calculation process. The game calculation process includes starting the game when game start conditions have been satisfied, proceeding with the game, calculating the game results, and finishing the game when game finish conditions have been satisfied, for example.

The object space setting section 104 disposes an object (i.e., an object formed by a primitive surface such as a polygon, a free-form surface, or a subdivision surface) that represents a display object such as a model object (i.e., a moving object such as a human, robot, car, fighter aircraft, missile, or bullet), a map (topography), a building, a course (road), a tree, or a wall in an object space. Specifically, the object space setting section 104 determines the position and the rotational angle (synonymous with orientation or direction) of the object in a world coordinate system, and disposes the object at the determined position (X, Y, Z) and the determined rotational angle (rotational angles around X, Y, and Z axes). Specifically, an object data storage section 172 of the storage section 170 stores object data that indicates the object's position, rotational angle, moving speed, moving direction, and the like corresponding to an object number.

The character control section 106 controls a character (model object). The term "character" used herein refers to a moving object (e.g., human, robot, or animal) that appears in the game. Specifically, the character control section 106 performs calculations for moving the character. The character control section 106 also performs calculations for causing the character to make a motion. Specifically, the character control section 106 causes the character to move in the object space or causes the character to make a motion (animation) based on operation information from the operation section 160, a program (movement/motion algorithm), various types of data (motion data), and the like. More specifically, the character control section 106 performs a simulation process that sequentially calculates movement information (position, rotational angle, speed, or acceleration) and motion information (position or rotational angle of a part object) about the character every frame (1/60th of a second). The term "frame" refers to a time unit used for the movement/motion process (simulation process) or the image generation process.

The character control section 106 reproduces the motion of the character based on motion data stored in a motion storage section 174. Specifically, the character control section 106 reads motion data including the position or the rotational angle (direction) of each part object (i.e., a bone that forms a skeleton) that forms the character (skeleton) from the motion storage section 174. The character control section 106 reproduces the motion of the character by moving each part object (bone) of the character (i.e., changing the shape of the skeleton).

The virtual camera control section 108 controls a virtual camera (viewpoint) for generating an image viewed from a given (arbitrary) viewpoint in the object space. Specifically, the virtual camera control section 108 controls the position (X, Y, Z) or the rotational angle (rotational angles around X, Y, and Z axes) of the virtual camera (i.e., controls the viewpoint position, the line-of-sight direction, or the angle of view).

The motion mode switch section 110 switches the motion mode (control mode) of the character. For example, the motion mode switch section 110 switches the motion mode between a free-move mode and a battle mode. Note that a mode other than the free-move mode and the battle mode may also be provided as the motion mode.

The target character selection section 112 selects a target character (attack target) from a plurality of other characters that are positioned within the character area.

The image generation section 120 performs a drawing process based on the results of various processes (game process or simulation process) performed by the processing section 100 to generate an image, and outputs the generated image to the display section 190. Specifically, the image generation section 120 performs a geometric process (e.g., coordinate transformation (world coordinate transformation and camera coordinate transformation), clipping, perspective transformation, or light source process), and generates drawing data (e.g., primitive surface vertex position coordinates, texture coordinates, color data, normal vector, or α-value) based on the results of the geometric process. The image generation section 120 draws the object (one or more primitive surfaces) obtained by perspective transformation (geometric process) in a drawing buffer 176 (i.e., a buffer (e.g., frame buffer or work buffer) that can store image information in pixel units). The image generation section 120 thus generates an image viewed from the virtual camera (given viewpoint) in the object space. The drawing process may be implemented by a vertex shader process or a pixel shader process.

The sound generation section 130 performs a sound process based on the results of various processes performed by the processing section 100 to generate game sound (e.g., background music (BGM), effect sound, or voice), and outputs the generated game sound to the sound output section 192.

In this embodiment, the motion mode switch section 110 switches the motion mode (control mode) of the character from the free-move mode to the battle mode when an encounter event between the character and another character (enemy character or target object) (i.e., an entry event of another character into the character area) has occurred in the free-move mode.

The term "free-move mode (free mode)" used herein refers to a mode in which the character moves on a field (map or area) in the object space. In the free-move mode, the character freely moves on the field based on the operation information from the operation section 160, for example.

The term "battle mode" used herein refers to a mode in which the character battles another character. For example, the character that makes a motion based on the operation information from the operation section 160 confronts and battles another character. The result of the battle between the character and the other character is calculated in the battle mode. For example, the strength parameter or the like of the other character is reduced when the character has attacked (hit) the other character, and the strength parameter or the like of the character is reduced when the other character has attacked (hit) the character. The battle result is determined by determining whether or not the strength parameter or the like of the character or the other character has reached zero within the time limit, for example.

In the free-move mode, the character control section 106 moves the character (player's character) on the field in the direction indicated by direction instruction information (operation information in a broad sense) from a direction instruction section (e.g., direction instruction key) of the operation section 160. For example, the direction instruction section of the operation section 160 allows the player to input a direction instruction (e.g., upward, downward, rightward, or leftward direction) with respect to the player. When the player has input a direction instruction (e.g., upward, downward, rightward, or leftward direction) using the direction instruction section, the character in the object space (game space) moves on the field in the moving direction (e.g., forward, backward, rightward, or leftward direction) corresponding to the direction instruction (instructed direction).

In the battle mode, the character control section 106 causes the character to make a battle motion indicated by the direction instruction information from the direction instruction section of the operation section 160 (reproduces the battle motion). Specifically, the battle motions of the character are respectively linked to the direction instructions (upward, downward, rightward, or leftward direction) input using the direction instruction section and combinations thereof. When the player has input a direction instruction (e.g., upward, downward, rightward, or leftward direction) using the direction instruction section, the character is caused to make a battle motion that corresponds to the direction instruction (upward, downward, rightward, or leftward direction, or a combination thereof). Note that the type of battle motion of the character after the player has input a direction instruction may be changed based on the motion of the character before the player inputs a direction instruction.

The battle motion is a motion necessary for the character to battle against another character. For example, the battle motion is a motion other than an attack motion (e.g., punch or kick). For example, the character control section 106 causes the character to make a guard motion (i.e., battle motion) in the battle mode. Specifically, the character control section 106 causes the character to guard itself against an attack motion of another character. For example, the character control section 106 causes the character to make a guard motion when the player has input a direction instruction that indicates the direction opposite to the other character. The character control section 106 causes the character to make at least one of a forward motion, a backward motion, a jump motion, and a squat motion (i.e., battle motion) in the battle mode. For example, the character control section 106 causes the character to make a forward motion, a backward motion, a jump motion, or a squat motion when the player has input a direction instruction that indicates the rightward direction, the leftward direction, the upward direction, or the downward direction, respectively, using the direction instruction section of the operation section 160, when the other character is situated on the right of the character. The character control section 106 may also cause the character to make a sideways movement (walk) motion (i.e., the character moves perpendicularly to the screen) as the battle motion, for example.

When the player has performed a given direction instruction operation using the operation section 160 in the battle mode, the character control section 106 may also move the character in the direction indicated by the direction instruction operation in the battle mode. For example, when the player has performed a given direction instruction operation during a battle between the character and the other character, the character moves in the direction indicated by the direction instruction operation in the same manner as in the free-move mode so that the character can battle against yet another character.

For example, when the operation section 160 includes a second direction instruction section (e.g., analog stick or analog lever) different from the direction instruction section (e.g., direction instruction key), and the player has operated the second direction instruction section in the battle mode, the character control section 106 moves the character in the direction indicated by the direction instruction information from the second direction instruction section in the battle mode. Specifically, the character moves freely based on the direction instruction information from the second direction instruction section in the battle mode in which the character battles the other character so that the character can battle against yet another character. When the operation section 160 includes the second direction instruction section, the character control section 106 may move the character in the direction indicated by the direction instruction information from the second direction instruction section when the player has operated the second direction instruction section in the free-move mode. In this case, the character can be moved in the direction indicated using the second direction instruction section in the free-move mode and the battle mode.

For example, when the operation section 160 includes an operation switch section (e.g., operation switch button (e.g., L-button)), and the player has operated the direction instruction section in the battle mode while operating the operation switch section, the character control section 106 also moves the character in the direction indicated by the direction instruction information from the direction instruction section in the battle mode. Specifically, the direction instruction section functions as an instruction section that indicates the battle motion or an instruction section that indicates the moving direction based on whether or not the player has operated the operation switch section.

The character control section 106 may control the character so that the moving speed of the character when the player has performed the given direction instruction operation (i.e., when the player has operated the second direction instruction section, or operated the direction instruction section while operating the second direction instruction section) in the battle mode is lower than the moving speed of the character in the free-move mode. Specifically, the character control section 106 causes the character to make a free run (i.e., the character moves at a high moving speed) in the free-move mode, and causes the character to make a free walk (i.e., the character moves at a moving speed lower than that when the character makes a free run) in the battle mode.

The character control section 106 may set the character to a given motion state when the motion mode has been switched to the battle mode after the character has been set to a running state (moving state) for a period equal to or longer than a given period (given frames or given time) in the free-move mode. For example, when the character has been set to a running state for a period equal to or longer than a given period in the free-move mode immediately before the motion mode has been switched to the battle mode, the character control section 106 causes the character to make a given motion corresponding to the running state.

In this case, the character may be set to a special running state (given motion state) in which the character does not make a jump motion. For example, when the motion mode has been switched from the free-move mode to the battle mode in a state in which the character is set to a running state, and another character is positioned in front of the character, the character is set to the special running state in the battle mode so that the character continuously runs in the battle mode. This prevents a situation in which the character makes an unintentional jump motion when the motion mode has been switched to the battle mode in a state in which the player inputs an upward direction instruction, for example. When the character is set to a normal battle running state, the character makes a jump motion when the player has input a jump instruction. When the character is set to the special running state, the character does not make a jump motion even when the player has input a jump instruction. This prevents a situation in which the character makes an unintentional jump motion, while ensuring that the player is given an impression that the character makes a normal battle running motion.

The character may be set to a running stop state as the given motion state. For example, when the motion mode has been switched from the free-move mode to the battle mode in a state in which the character is set to a running state, and another character is situated at a position other than the front of the character, the character is set to the running stop state so that the character can battle against the other character.

The character control section 106 causes the character to make a battle motion indicated by the direction instruction information from the direction instruction section after the character has been set to the given motion state. Specifically, when the motion mode has been switched from the free-move mode to the battle mode in a state in which the character is set to a running state, the character control section 106 temporarily sets the character to the given motion state (e.g., special running state or running stop state), and then causes the character to make a battle motion indicated by the direction instruction information.

The character control section 106 may cause the character to make a motion other than a jump motion even if the direction instruction information from the direction instruction section indicates a jump motion, when the distance between the character and another character (target) is equal to or longer than a given distance (outside a given distance range). Specifically, the character control section 106 cancels the jump instruction input by the player, and causes the character to make a motion (e.g., sideways walk motion) other than a jump motion. This prevents a situation in which the character makes an unintentional jump motion when the player has input an upward direction instruction after the motion mode has been switched to the battle mode.

The motion mode switch section 110 may switch the motion mode of the character from the free-move mode to the battle mode when another character has entered the character area set for the character. For example, the character area (e.g., circular area) is set around the character, and the motion mode is switched between the free-move mode and the battle mode based on whether or not another character is positioned within the character area. Note that the motion mode may be switched using an area set for another character.

The target character selection section 112 may alternately select another character that is positioned closest to the character and yet another character that is positioned second closest to the character as the target character when the player has operated a target switch section (e.g., target switch button (e.g., R-button)) of the operation section 160. For example, when another character that is closest to the character operated by the player is referred to as a first character, and yet another character that is second closest to the character is referred to as a second character, the target character selection section 112 switches the target character from the first character to the second character, and vice versa, each time the player has operated the target switch section.

Suppose that the operation section 160 includes the second direction instruction section, and the character control section 106 has moved the character in the direction indicated by the direction instruction information when the player has operated the second direction instruction section in the battle mode. In this case, the target character selection section 112 may select another character that is positioned within a direction range that includes the direction indicated by the direction instruction information from the second direction instruction section as the target character. Specifically, when the character has moved in the direction indicated using the second direction instruction section, and another character is positioned in front of the character, the target character selection section 112 selects the other character as the target character (attack target).

The virtual camera control section 108 may perform a free-move mode camera control process in the free-move mode, and may perform a battle mode camera control process in the battle mode. Specifically, when the virtual camera control section 108 performs the free-move mode camera control process, the virtual camera control section 108 sets the direction of a line-of-sight line that connects a target point and the character to be a target line-of-sight direction of the virtual camera. That is, the virtual camera control section 108 controls the virtual camera so that the line-of-sight direction of the virtual camera follows (coincides with) the target line-of-sight direction that is the line-of-sight direction of an ideal camera.

When the virtual camera control section 108 performs the free-move mode camera control process, the virtual camera control section 108 may set a position along the line-of-sight line at which the character is included within the field of view to be a target viewpoint position of the virtual camera. The virtual camera control section 108 controls the virtual camera so that the viewpoint position of the virtual camera follows (coincides with) the target viewpoint position that is the viewpoint position of an ideal camera. It suffices that the target viewpoint position be set to be a position behind the character along the line-of-sight line. The target viewpoint position may be a position on the line-of-sight line, or may be a position that is not located on the line-of-sight line.

When the virtual camera control section 108 performs the battle mode camera control process, the virtual camera control section 108 sets the direction of the line-of-sight line that diagonally intersects a connection line that connects the character and another character to be the target line-of-sight direction of the virtual camera. For example, the virtual camera control section 108 calculates a line-of-sight line that starts from a camera gaze point on the connection line and forms an angle of 90° or less (acute angle) with the connection line, and controls the virtual camera so that the line-of-sight direction of the virtual camera follows (coincides with) the target line-of-sight direction that is the direction of the line-of-sight line.

When the virtual camera control section 108 performs the battle mode camera control process, the virtual camera control section 108 may set a position along the line-of-sight line at which the character and another character are included within the field of view to be the target viewpoint position of the virtual camera, and control the virtual camera so that the viewpoint position of the virtual camera follows (coincides with) the target viewpoint position. In this case, it suffices that the target viewpoint position be set to be a position at which the virtual camera looks down at the character and another character along the line-of-sight line. The target viewpoint position may be a position on the line-of-sight line, or may be a position that is not located on the line-of-sight line.

The virtual camera control section 108 determines whether the virtual camera is positioned in a first area or a second area (left area and right area with respect to the connection line) when an encounter event between the character and another character has occurred, the first area and the second area being defined (divided) by the connection line that connects the character and the other character. When the virtual camera is positioned in the first area, the virtual camera control section 108 sets the direction of the line-of-sight line that diagonally intersects the connection line in the first area to be the target line-of-sight direction of the virtual camera. For example, when the first area is a left area with respect to the character, the virtual camera control section 108 calculates a line-of-sight line that is rotated clockwise around the camera gaze point by a given angle with respect to the connection line, and sets the direction of the line-of-sight line to be the target line-of-sight direction.

When the virtual camera is positioned in the second area when the encounter event has occurred, the virtual camera control section 108 sets the direction of the line-of-sight line that diagonally intersects the connection line in the second area to be the target line-of-sight direction of the virtual camera. For example, when the second area is a right area with respect to the character, the virtual camera control section 108 calculates a line-of-sight line that is rotated counterclockwise around the camera gaze point by a given angle with respect to the connection line, and sets the direction of the line-of-sight line to be the target line-of-sight direction.

### 2. Method according to this embodiment

### 2.1 Free-move mode and battle mode

This embodiment utilizes the free-move mode in which the character operated by the player can move freely on the field (map or area) in a battle game (e.g., fighting game). Specifically, when the player has designated the moving direction using the direction instruction section (e.g., direction instruction key) of the operation section 160, the character moves in the designated direction.

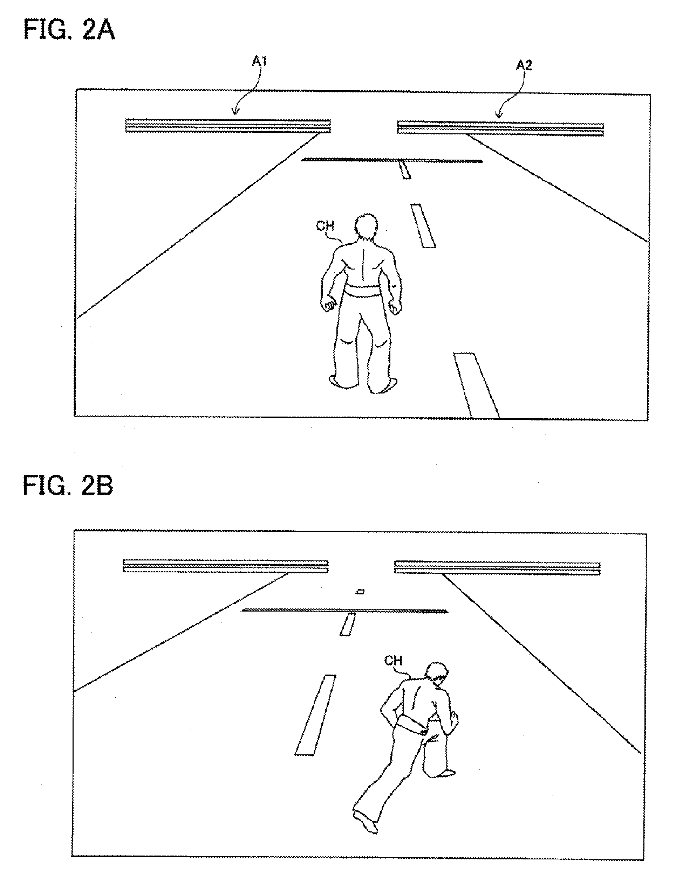

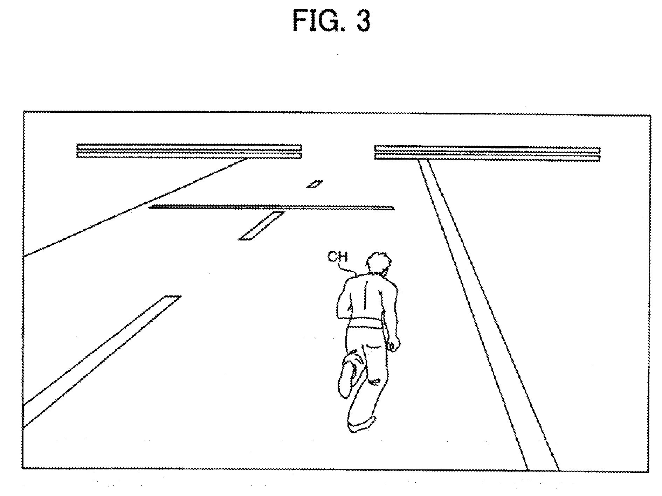

FIGS. 2A to 3 show examples of a game image generated according to this embodiment in the free-move mode. In FIG. 2A, a character CH stands without moving. When the player has input an upper right direction instruction using the direction instruction section, the character CH moves in the right forward direction (right forward direction with respect to the character) that corresponds to the upper right direction of the direction instruction section (see FIG. 2B). Specifically, the character CH moves in the right forward direction while making a running motion (free run). When the player has then input an upward direction instruction, the character CH moves in the forward direction (forward direction with respect to the character) that corresponds to the upward direction of the direction instruction section (see FIG. 3). Specifically, the character CH moves in the forward direction while making a running motion.

In the fighting game according to this embodiment, a plurality of areas are set (disposed) on the map. The player aims at defeating an enemy that appears in each area to conquer all of the areas. Each area is mainly formed by an action part in which the character advances on a three-dimensional map while defeating the enemy. The player operates the character CH in order to conquer each area in cooperation with a mate character (not shown) that is operated by a computer or another player. A boss character appears at the end of each area. The player can conquer each area by defeating the boss character, for example. In FIG. 2A, A1 indicates a strength gauge that indicates the strength parameter (remaining strength) of the character CH, and A2 indicates a strength gauge of the mate character (not shown).

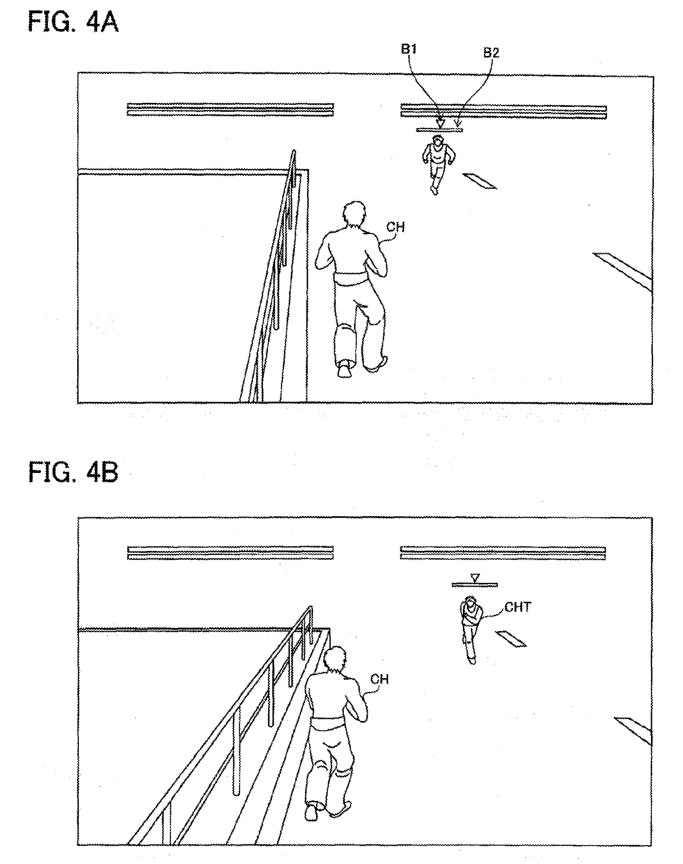

FIG. 4A shows an example of a game image when the character CH has encountered another character CHT (target (enemy)) in the free-move mode. In this embodiment, when an encounter event between the character CH and the other character CHT has occurred, the motion mode (control mode) of the character CH is switched from the free-move mode (free mode) to the battle mode. Specifically, the character CH is set to the free-move mode when an enemy (character or object) is not positioned near the character CH. When an enemy is positioned near the character CH, the enemy is set as the target, and the motion mode of the character CH is switched to the battle mode. The battle mode is a normal operation mode of a fighting game. In the battle mode, the player can operate the character CH in a normal operation mode that has been employed in the series of the fighting game.

In the battle mode, the player can also freely move the character CH on the field by operating the second direction instruction section (e.g., analog stick) of the operation section 160, for example. Note that the character CH makes a free run at a high moving speed in the free-move mode shown in FIGS. 2A to 3, and makes a free walk that is lower in moving speed than the free run when the player has operated the second direction instruction section (or the player has operated the direction instruction section while operating the operation switch section (e.g., L-button)) in the battle mode.

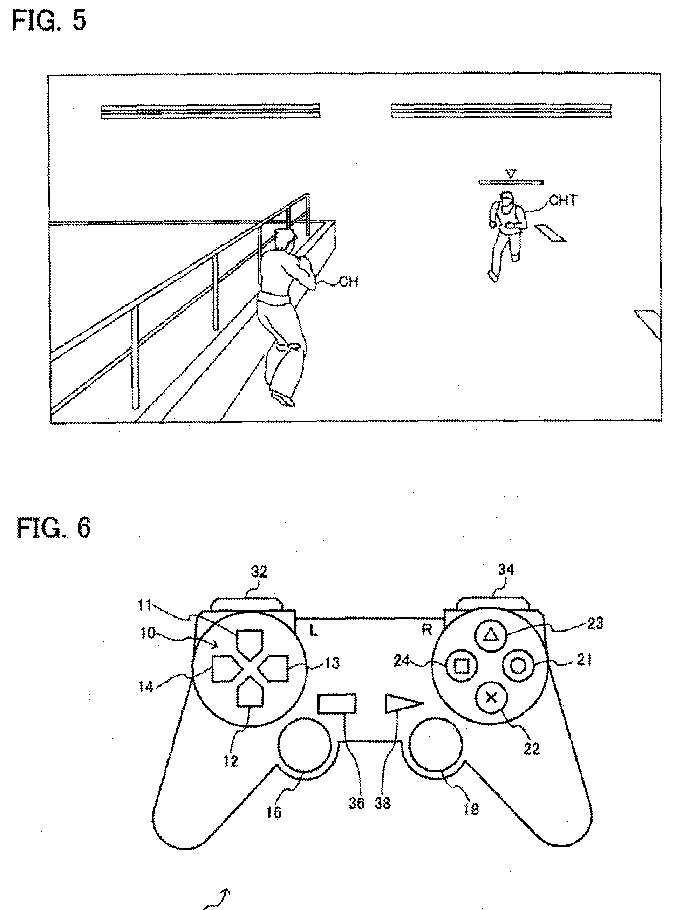

When the motion mode of the character CH has been switched to the battle mode (see FIG. 4A), the line-of-sight direction or the like of the virtual camera changes (see FIGS. 4B and 5). As shown in FIG. 5, the virtual camera is set to diagonally observe the character CH and the other character CHT.

When the player has operated the direction instruction section (direction instruction key) of the operation section 160 in this state, the character CH makes a battle motion that is linked to each direction. For example, when the player has input an upward direction instruction, the character CH makes a jump motion. When the player has input a downward direction instruction, the character CH makes a squat motion. When the player has input a rightward or leftward direction instruction, the character CH makes a forward motion, a backward motion, or a guard motion. When the player has input an attack motion instruction, the character CH attacks (e.g., kicks or punches) the other character CHT while making a battle motion.

In FIG. 4A, B1 indicates a marker that indicates that the other character CHT is the attack target of the character CH. B2 indicates a strength gauge that indicates the strength parameter (remaining strength) of the other character CHT.

The free-move mode and the battle mode are described in detail below. FIG. 6 shows an example of the operation section 160. FIG. 6 shows an example of a game controller of a consumer game device.

A direction instruction key (arrow key) 10 functions as the direction instruction section, and includes instruction buttons 11, 12, 13, and 14. The instruction buttons 11, 12, 13, and 14 are used to respectively designate the upward direction, the downward direction, the rightward direction, and the leftward direction with respect to the player. The player presses the instruction buttons 11 and 13 at the same time when issuing an upper right direction instruction. A lower right direction instruction, an upper left direction instruction, and a lower left direction instruction are input in the same manner as the upper right direction instruction. Note that the shape and the configuration of the direction instruction key 10 are not limited to those shown in FIG. 6. Various known shapes and configurations may be used.

A left analog stick (analog lever) 16 functions as the second direction instruction section. The analog stick 16 is a joystick that is moved to input a direction instruction. For example, an upward direction instruction, a downward direction instruction, a leftward direction instruction, or a rightward direction instruction is input by moving the analog stick 16 in the upward direction, the downward direction, the leftward direction, or the rightward direction, respectively. A diagonal direction instruction is input by diagonally moving the analog stick 16. A right analog stick 18 also functions as the direction instruction section. The analog stick 18 is not used in this example.

Operation buttons 21, 22, 23, and 24 function as attack instruction sections. For example, when the player has pressed the operation button 21 or 22, the character makes a right kick motion or a left kick motion, respectively. When the player has pressed the operation button 23 or 24, the character makes a right punch motion or a left punch motion, respectively. Note that assignment of the attack motions to the operation buttons 21, 22, 23, and 24 according to this embodiment is not limited thereto. Various modifications and variations may be made.

In this embodiment, an L-button 32 provided in the left area of the operation section 160 functions as the operation switch section. For example, a free walk in the battle mode is implemented by operating the direction instruction key 10 while pressing the L-button 32. An R-button 34 provided in the right area of the operation section 160 functions as a target switch section. For example, the target enemy character can be switched by pressing the R-button 34. A button 36 is a select button, and a button 38 is a start button.

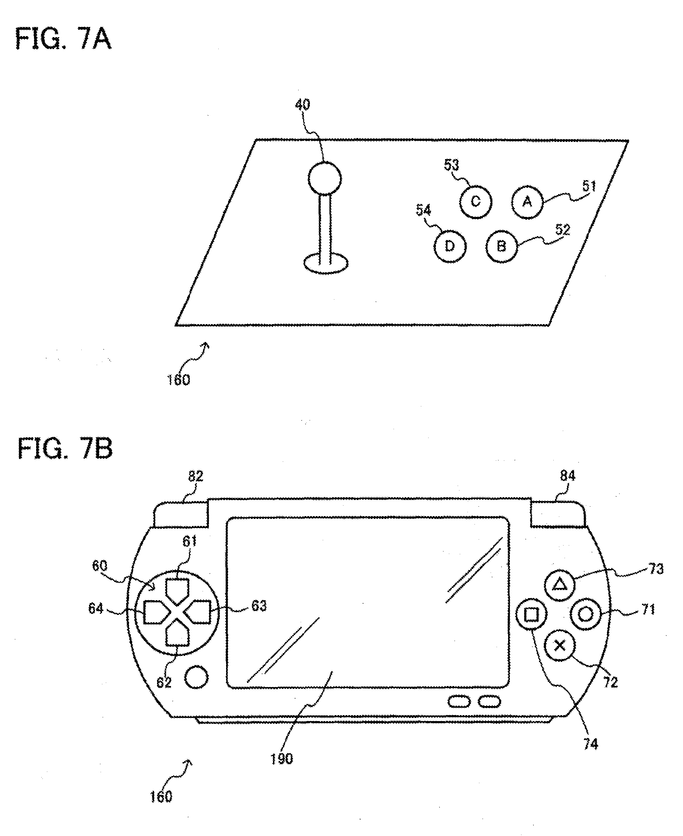

Note that the shape and the configuration of the operation section 160 according to this embodiment are not limited to those shown in FIG. 6. FIG. 7A shows an example of the operation section 160 used for an arcade game device. In FIG. 7A, an operation lever 40 functions as the direction instruction section. Buttons 51, 52, 53, and 54 function as the attack instruction sections. The functions of the second direction instruction section, the operation switch section, and the target switch section may be implemented by providing an operation lever, a button, and the like other than those shown in FIG. 7A, or operating the operation lever 40 and the button 51, 52, 53, or 54 in combination, for example.

FIG. 7B shows an example of the operation section 160 used for a portable game device. In FIG. 7B, the operation section 160 is integrated in the game device. A direction instruction key 60 that includes instruction buttons 61, 62, 63, and 64 functions as the direction instruction section, and operation buttons 71, 72, 73, and 74 function as the attack instruction sections. An L-button 82 functions as the operation switch section, and an R-button 84 functions as the target switch section.

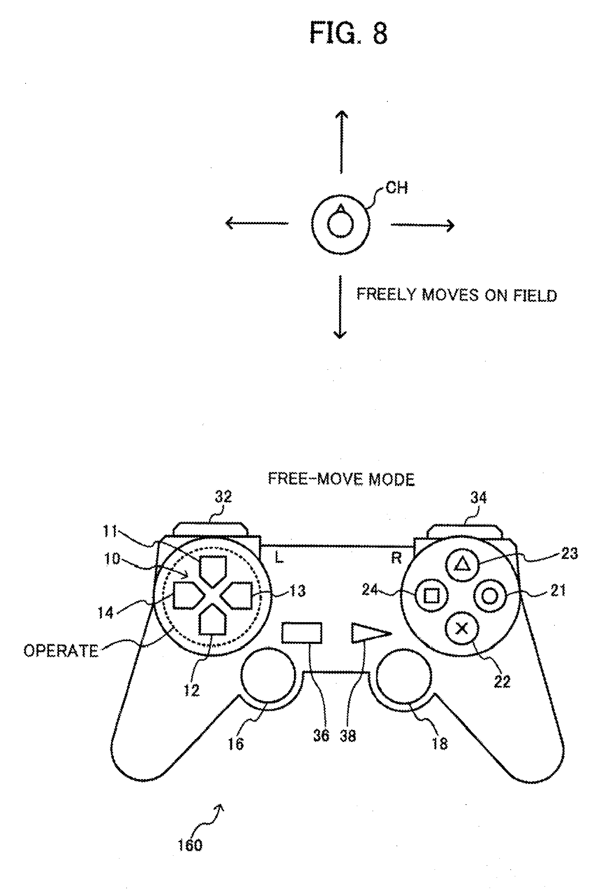

FIG. 8 is a view illustrative of the details of the free-move mode. In the free-move mode, the player can freely move the character CH on the field by operating the direction instruction key 10 of the operation section 160.

For example, when the player has pressed the upward direction instruction button 11 or the downward direction instruction button 12 of the direction instruction key 10 (direction instruction section), the character CH moves in the forward direction or the backward direction, respectively. When the player has pressed the rightward direction instruction button 13 or the leftward direction instruction button 14, the character CH moves in the rightward direction or the leftward direction, respectively. When the player has pressed the instruction buttons 11 and 13 at the same time, the character CH moves in the right forward direction. The character CH can be moved in the right backward direction, the left forward direction, or the left backward direction in the same manner as the right forward direction.

In this embodiment, the character CH moves on the field when the player has operated the analog stick 16 (second direction instruction section) in the free-move mode. For example, when the player has moved the analog stick 16 in the upward direction, the character CH moves in the forward direction. When the player has moved the analog stick 16 in the downward direction, the character CH moves in the backward direction. The character CH similarly moves when the player has moved the analog stick 16 in the rightward direction, the leftward direction, or a diagonal direction. In the free-move mode, the character CH makes a free run at a moving speed higher than that of a free walk in the battle mode.

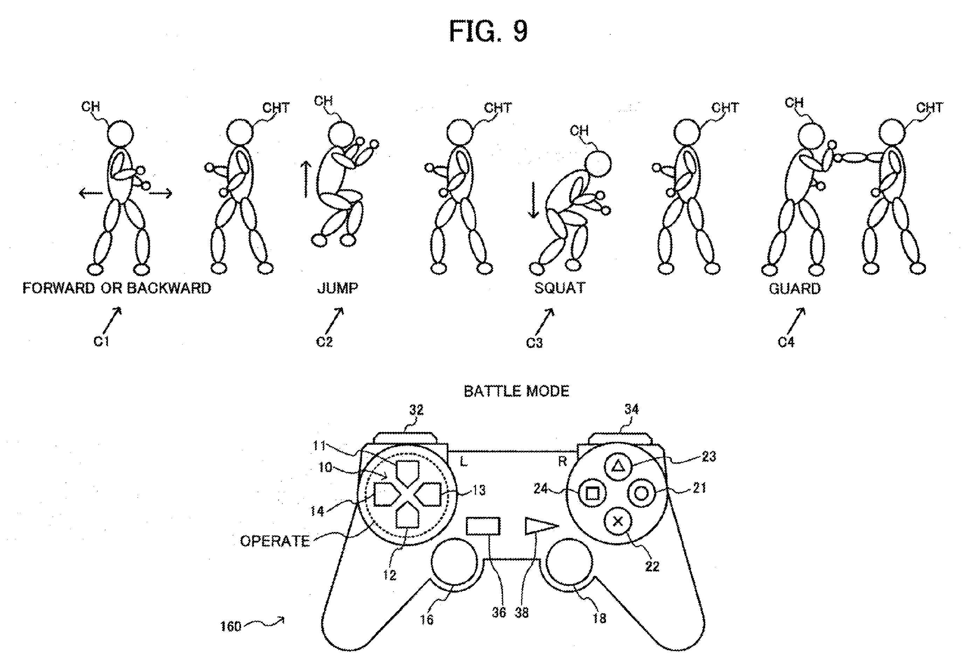

FIG. 9 is a view illustrative of the details of the battle mode. When the character CH has encountered the other character CHT so that the motion mode of the character CH has been switched to the battle mode, the direction instruction key 10 that functions as the moving direction instruction section in the free-move mode shown in FIG. 8 functions as a battle motion instruction section.

Specifically, when the player has pressed the rightward direction instruction button 13 of the direction instruction key 10, the character CH makes a forward motion (forward walk motion) toward the other character CHT along a line that connects the character CH and the other character CHT (C1 in FIG. 9). When the player has pressed the leftward direction instruction button 14, the character CH makes a backward motion (backward walk motion). FIG. 9 shows an example in which the other character CHT is positioned on the right side of the character CH on the screen. The instruction buttons have opposite functions when the other character CHT is positioned on the left side of the character CH. Specifically, the character CH makes a forward motion when the player has pressed the instruction button 14, and makes a backward motion when the player has pressed the instruction button 13.

When the player has pressed the upward direction instruction button 11, the character CH makes a jump motion (see C2). When the player has pressed the downward direction instruction button 12, the character CH makes a squat motion (see C3). When the player has pressed the leftward direction instruction button 14 (i.e., an instruction button that indicates the direction opposite to the other character) when the other character CHT has attacked the character CH, the character CH makes a guard motion (see C4). When the other character CHT is positioned on the left side of the character CH, the character CH makes a guard motion when the player has pressed the rightward direction instruction button 14.

In the battle mode shown in FIG. 9, the player can freely move the character CH on the field by operating the analog stick 16. For example, when the player has moved the analog stick 16 in the upward direction, the downward direction, the rightward direction, or the leftward direction, the character CH moves in the forward direction, the backward direction, the rightward direction, or the leftward direction, respectively. In this case, the character CH makes a free walk at a moving speed lower than that of the free-move mode (free run) shown in FIG. 8. A free walk in the battle mode is also implemented by pressing the direction instruction key 10 while pressing the L-button 32. Specifically, when the player has pressed the instruction button 11, 12, 13, or 14 of the direction instruction key 10 while pressing the L-button 32, the character CH makes a walk motion in the forward direction, the backward direction, the rightward direction, or the leftward direction, respectively.

Note that the battle motions shown in FIG. 9 are only examples. The battle motions according to this embodiment are not limited to the battle motions shown in FIG. 9. For example, the character CH may make a forward or backward dash motion when the player has quickly operated the instruction button 13 or 14 twice, or may make a sideways motion perpendicularly to the screen when the player has quickly operated the instruction button 11 or 12. The character CH may make a sideways walk motion perpendicularly to the screen when the player has quickly operated the instruction button 11 or 12 and then operated the instruction button 11 or 12 for a long time.

In the battle mode shown in FIG. 9, the player inputs an attack motion instruction using the operation buttons 21, 22, 23, and 24 while issuing a battle motion instruction using the instruction buttons 11, 12, 13, and 14 of the direction instruction key 10. For example, the player causes the character CH to attack the other character CHT with the right foot, the left foot, the right fist, or the left fist by pressing the operation button 21, 22, 23, or 24, while causing the character CH to advance by pressing the instruction button 13. Alternatively, the player causes the character CH to perform a special technique by operating any of the operation buttons 21, 22, 23, and 24 in combination, or operating any of the instruction buttons 11, 12, 13, and 14 and the operation buttons 21, 22, 23, and 24 in combination.

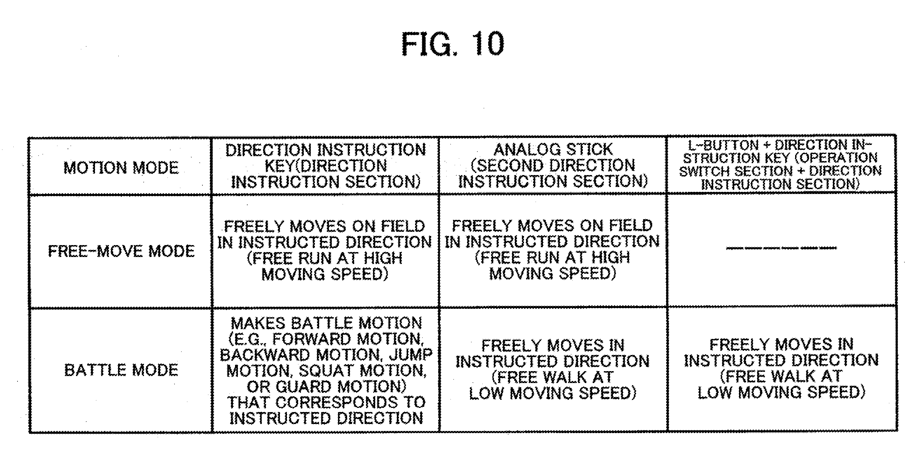

FIG. 10 is a view illustrative of the summary of the free-move mode and the battle mode according to this embodiment.

As shown in FIG. 10, when the player has operated the direction instruction key 10 in the free-move mode, the character CH moves freely on the field in the instructed (indicated) direction. In this case, the character CH makes a free run at a high moving speed. When the player has operated the analog stick 16 in the free-move mode, the character CH moves freely on the field in the instructed (indicated) direction. In this case, the character CH also makes a free run at a high moving speed.

When the player has operated the direction instruction key 10 in the battle mode, the character CH makes a battle motion (e.g., forward motion, backward motion, jump motion, squat motion, or guard motion) that corresponds to the instructed direction.

When the player has operated the analog stick 16 in the battle mode, the character CH moves freely on the field in the instructed direction. In this case, the character CH makes a free walk at a low moving speed. When the player has operated the direction instruction key 10 while pressing the L-button 32, the character CH makes a free walk in the instructed direction.

According to this embodiment, the player causes the character to move on the field by operating the direction instruction key 10 in the free-move mode. When the character has encountered another character so that the motion mode of the character has been switched to the battle mode, the direction instruction key 10 functions as the battle motion instruction section. The player enjoys a battle against the other character by causing (instructing) the character to make a battle motion in the same manner as a normal fighting game.

Specifically, when only the battle mode in which the character confronts and battles another character (see FIG. 9) is provided as the play mode that the player can enjoy, the player may lose interest in game play (i.e., the player may not repeatedly play the game).

In this embodiment, the free-move mode shown in FIG. 8 is provided. When the character has encounters another character in the free-move mode, the motion mode of the character is switched to the battle mode shown in FIG. 9. This makes it possible to provide the player with a new play mode in which the player enjoys the game by causing the character to move about on the field while searching for an enemy, and defeat an enemy that the character has encountered. This implements various play modes to prompt the player to repeatedly play the game.

On the other hand, the player may suffer inconvenience if the operation method is changed to an operation method different from the operation method that has been employed in the fighting game when the motion mode has been switched from the free-move mode shown in FIG. 8 to the battle mode shown in FIG. 9.

According to this embodiment, since the player can cause the character to make a battle motion in the battle mode (FIG. 9) by the operation method that has been employed in the fighting game, a situation in which the player suffers inconvenience can be prevented. Specifically, since the player can enjoy a battle against another character by a familiar operation method that has been employed in the series of the fighting game, an improved operation interface environment can be provided to the player. Moreover, since the player can input a special motion (e.g., guard motion) instruction by a familiar operation method, the player can comfortably enjoy the game.

As a comparative example of this embodiment, the player may move the character in the free-move mode by operating only the analog stick 16, and cause the character to make a battle motion in the battle mode by operating the direction instruction key 10.

According to the comparative example, however, when the motion mode has been switched from the free-move mode to the battle mode, the player must change the thumb placement position from the analog stick 16 to the direction instruction key 10, for example. Likewise, when the motion mode has been switched from the battle mode to the free-move mode, the player must change the thumb placement position from the direction instruction key 10 to the analog stick 16. Therefore, since the player must perform a complex operation, the player may be confused, for example. When enemies appear one after another in the free-move mode, the player must change the thumb placement position each time the character encounters the enemy, so that the operation of the player may be delayed, or the player may be confused.

According to this embodiment, the player can input an operation instruction using only the direction instruction key 10 in the free-move mode and the battle mode, for example. Therefore, the player need not change the thumb placement position even when the motion mode has been switched from the free-move mode to the battle mode, or switched from the battle mode to the free-move mode. This prevents a situation in which the player must perform a complex operation, the operation of the player is delayed, or the player is confused, for example.

The operation section may not include the analog stick 16 depending on the type of operation section (game controller). According to the comparative example, the play mode cannot be switched between the free-move mode and the battle mode when using such an operation section.

According to this embodiment, even if the operation section does not include the analog stick 16, the player can input a moving direction instruction using the direction instruction key 10 in the free-move mode, and input a battle motion instruction using the direction instruction key 10 in the battle mode, for example. Therefore, the play mode can be switched between the free-move mode and the battle mode even when using the operation section that does not include the analog stick 16.

According to this embodiment, the player can cause the character to make a free walk in the battle mode using the analog stick 16. Therefore, even when a plurality of other characters are positioned around the character, the player can cause the character to move toward the desired character using the analog stick 16, and enjoy a battle against the desired character, for example.

According to this embodiment, even when using the operation section does not include the analog stick 16, a free walk can be implemented by operating the direction instruction key 10 while pressing the L-button 32, for example. Therefore, even when using such an operation section, the player can cause the character to make a free walk toward the desired character in the battle mode, and enjoy a battle against the desired character.

According to this embodiment, since the character makes a high-speed free run in the free-move mode, the player can smoothly cause the character to move over a large (wide) field (area) without feeling stress or the like. On the other hand, since the character makes a low-speed free walk in the battle mode, the player can carefully cause the character to move within a narrow area to select an opposing character, and battle the selected character, for example.

### 2.2 Switch of motion mode and selection of target character

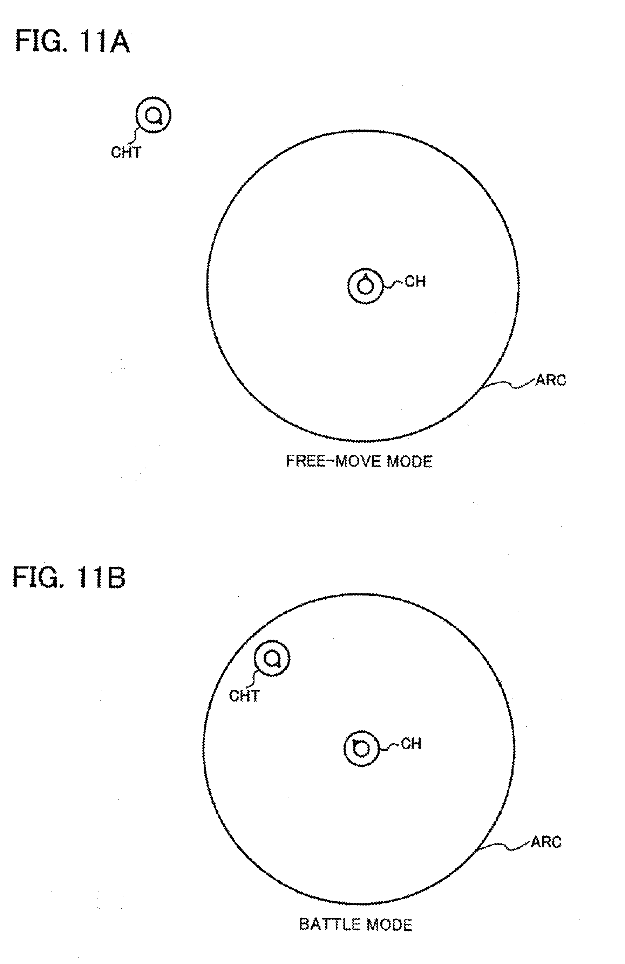

In this embodiment, a character area ARC is set around the character CH, as shown in FIG. 11A. In FIG. 11A, the character area ARC is a round area (e.g., an area having a radius of 8 to 10 m) that is formed around the character CH, for example.

As shown in FIG. 11A, when the other character CHT is not positioned within the character area ARC, the motion mode is set to the free-move mode.

As shown in FIG. 11B, when the other character CHT has entered the character area ARC, the motion mode is switched from the free-move mode to the battle mode. When the other character CHT has been defeated by the character CH and disappeared, or the other character CHT has left the character area ARC, for example, the motion mode is switched from the battle mode to the free-move mode.

When the motion mode is switched as shown in FIGS. 11A and 11B, the player can cause the character CH to move and search for an enemy in the free-move mode, and cause the character CH to battle the other character CHT when the other character CHT has entered the character area ARC and the motion mode is switched to the battle mode. The motion mode is switched to the free-move mode when the other character CHT has disappeared, and the player causes the character CH to move and search for another enemy. This makes it possible to provide the player with a novel fighting game. Since the player need not change the thumb placement position or the like even when the motion mode is frequently switched, the player can comfortably enjoy the game.

When switching the motion mode by the method shown in FIGS. 11A and 11B, a plurality of other characters may be positioned within the character area ARC. This embodiment deals with such a situation by selecting the target character (i.e., attack target) from a plurality of other characters that are positioned within the character area ARC.

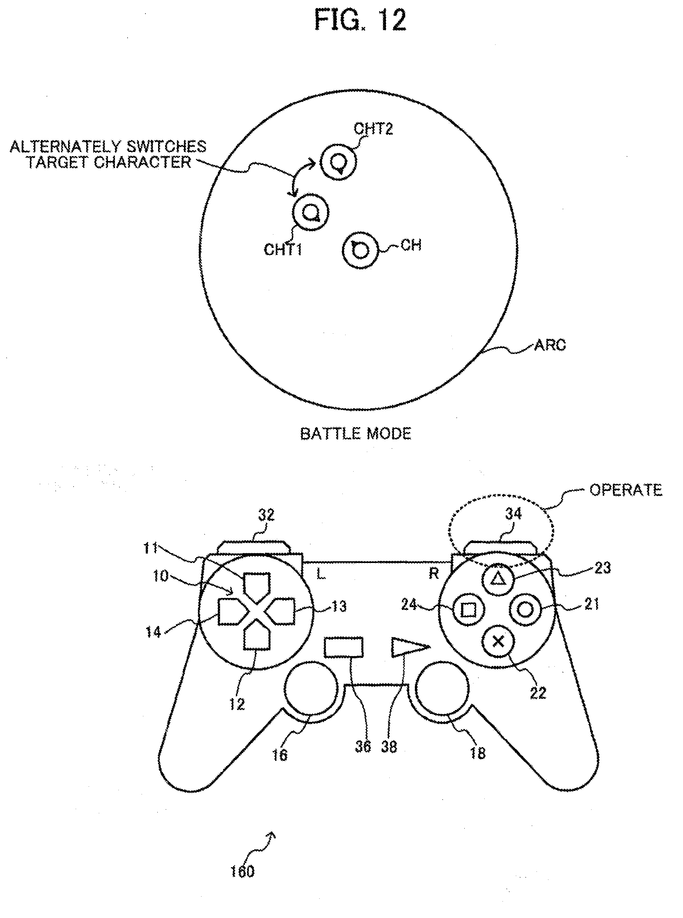

FIG. 12 is a view illustrative of a first target character selection method. In the first selection method, another character CHT1 that is closest to the character CH and yet another character CHT2 that is second closest to the character CH are alternately selected as the target character when the player has operated the R-button 34 (target switch section) of the operation section 160. For example, when the player has pressed the R-button 34 when the character CHT1 that is closest to the character CH is selected as the target character, the target character is switched to the character CHT2 that is second closest to the character CH. The character CH can thus attack the character CHT2. When the player has pressed the R-button 34 in this state, the target character is switched to the character CHT1 so that the character CH can attack the character CHT1.

In this embodiment, the player causes the character to confront and battle another character in the battle mode using the operation mode that has been employed in the fighting game. Therefore, when another character that is positioned away from the character is selected as the target, a battle may not be smoothly implemented by the usual operation method since the character and the other character are spaced apart to a large extent.

According to the first selection method shown in FIG. 12, the characters CHT1 and CHT2 positioned close to the character CH are alternately selected when the player has pressed the R-button 34. This prevents a situation in which another character that is positioned away from the character CH is selected so that the character CH and the target character are spaced apart to a large extent. Note that the number of other characters switched by pressing the R-button 34 may be three or more.

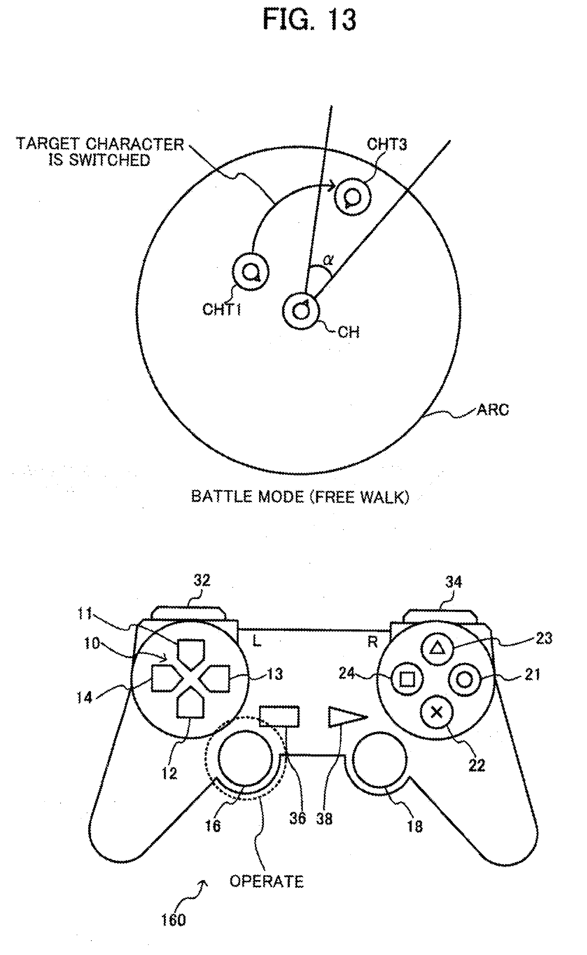

FIG. 13 is a view illustrative of a second target character selection method. In the second selection method, a character CHT3 that is positioned within a given range in the direction indicated using the analog stick 16 (second direction instruction section) is selected as the target character, for example.

In this embodiment, the character CH makes a free walk in the battle mode when the player has operated the analog stick 16 (or operated the L-button and the direction instruction key). In FIG. 13, the character CH that has battled the character CHT1 makes a free walk in the right forward direction when the player has moved the analog stick 16 in the upper right direction, for example. In FIG. 13, the character CHT3 is positioned within a given range (angle α) including the moving direction of the character CH. In this case, the character CHT3 that is positioned in the moving direction of the character CH is selected as the target character. The character CH makes a free walk toward the character CHT3, and battles the character CHT3 in a state in which the character CH and the character CHT3 are appropriately spaced. This makes it possible to select a suitable target character when the character makes a free walk in the battle mode.

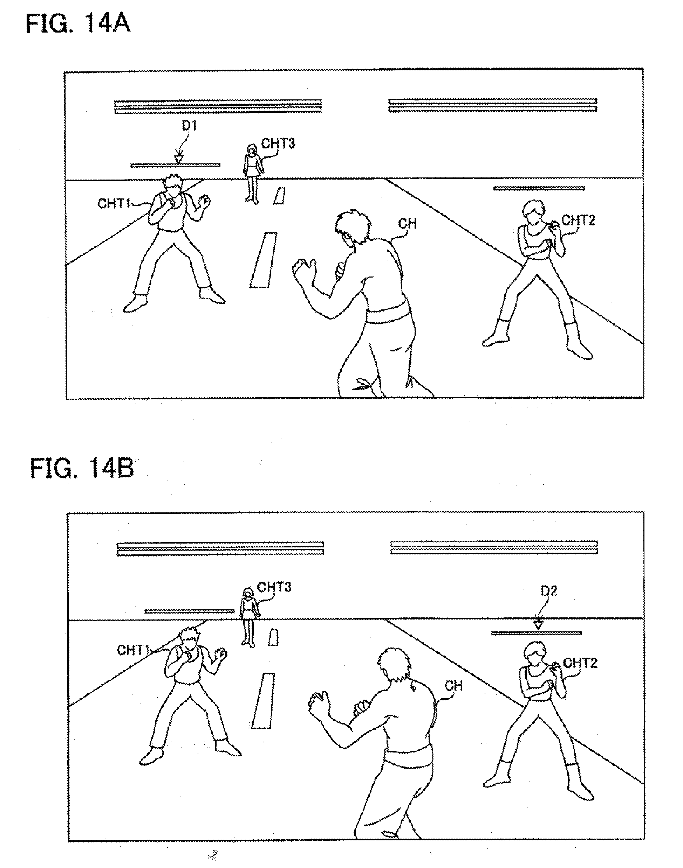

FIGS. 14A to 15 show examples of a game image that is generated when the target character is selected by the first selection method shown in FIG. 12.

In FIG. 14A, the character CHT1 that is positioned closest to the character CH is selected as the target character. A marker that indicates that the character CHT1 is the target character is displayed over the character CHT1 (see D1).

When the player has pressed the R-button 34 in a state shown in FIG. 14A, the character CHT2 that is positioned second closest to the character CH is selected as the target character, as shown in FIG. 14B. A marker that indicates that the character CHT2 is the target character is displayed over the character CHT2 (see D2).

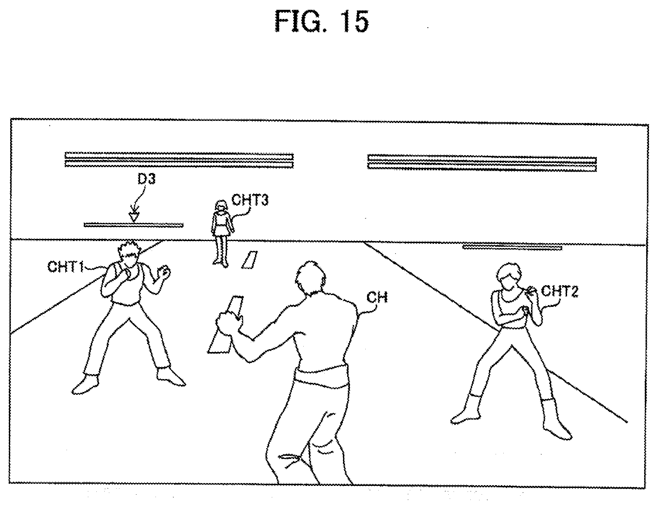

When the player has pressed the R-button 34 in a state shown in FIG. 14B, the character CHT1 that is positioned closest to the character CH is again selected as the target character, as shown in FIG. 15. A marker that indicates that the character CHT1 is the target character is displayed over the character CHT1 (see D3).

In FIGS. 14A to 15, the characters CHT1 and CHT2 that are positioned close to the character CH are alternately selected as the target character, while the character CHT3 that is positioned away from the character CH is not selected as the target character. Note that the distance between the character and another character is calculated every frame, and the other character that is positioned closest to the character is determined every frame. Therefore, even if the character CHT1 is positioned closest to the character CH in FIG. 14A, the character CHT1 is not necessarily positioned closest to the character CH in FIG. 14B or 15, for example.

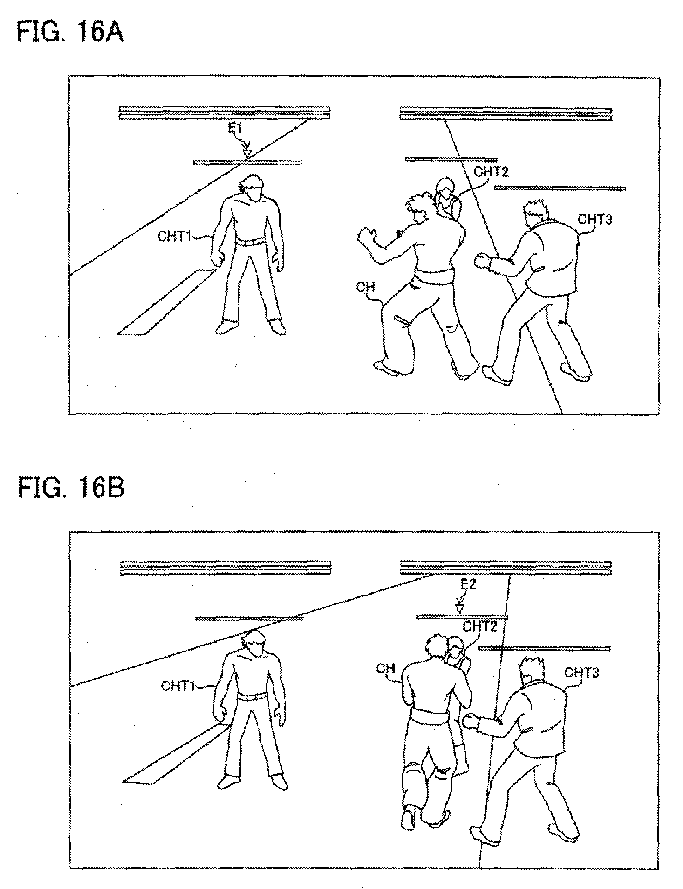

FIGS. 16A to 17 show examples of a game image that is generated when the target character is selected by the second selection method shown in FIG. 13.

FIG. 16A shows an example in which the player moves the analog stick 16 in the upper left direction in the battle mode. In this case, the character CH moves in the moving direction corresponding to the upper left direction of the analog stick 16, and the character CHT1 that is positioned within a given range including the moving direction is selected as the target character. A marker that indicates that the character CHT1 is the target character is displayed above (corresponding to (in connection with)) the character CHT1 (see E1). Therefore, the character CH can battle the character CHT1 in the battle mode.

FIG. 16B shows an example in which the player moves the analog stick 16 in the upward direction. In this case, the character CH moves in the moving direction corresponding to the upward direction of the analog stick 16, and the character CHT2 that is positioned within a given range including the moving direction is selected as the target character. A marker that indicates that the character CHT2 is the target character is displayed over the character CHT2 (see E2). Therefore, the character CH can battle the character CHT2.

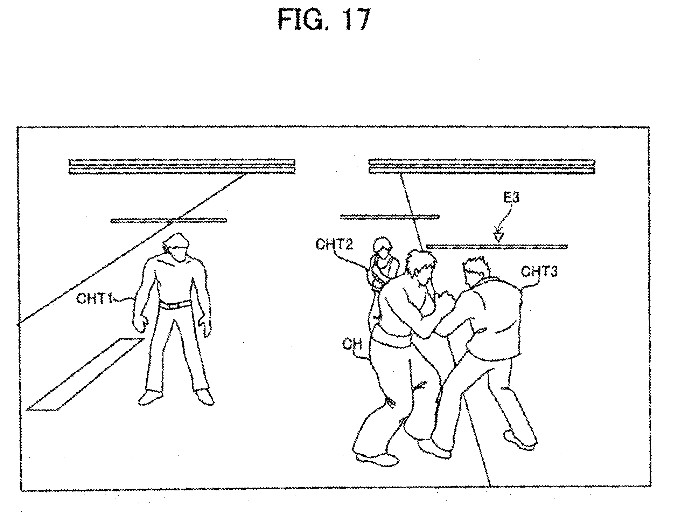

FIG. 17 shows an example in which the player moves the analog stick 16 in the rightward direction, and the character CHT3 is selected as the target character. A marker that indicates that the character CHT3 is the target character is displayed over the character CHT3 (see E3). Therefore, the character CH can battle the character CHT3.

In FIGS. 16A to 17, since the target character is selected when the player causes the character to make a free walk by operating the analog stick 16 (or the L-button and the direction instruction key), an operation environment convenient to the player can be provided.

### 2.3 Virtual camera control

When the play modes include the free-move mode and the battle mode, it is desirable to control the virtual camera so that the player can smoothly play the game in each mode.

In this embodiment, a free-move mode camera control process is performed in the free-move mode, and a battle mode camera control process different from the free-move mode camera control process is performed in the battle mode.

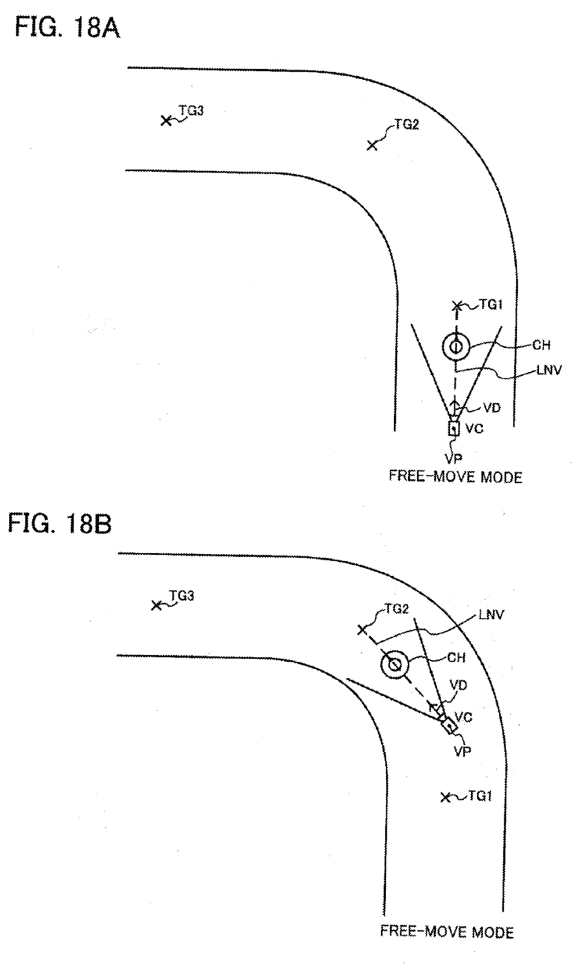

FIGS. 18A and 18B are views illustrative of the free-move mode camera control process.

As shown in FIG. 18A, virtual camera control target points (gaze points) TG1, TG2, and TG3 are set in the corresponding areas on the field in which the character CH moves.

In FIG. 18A, since the character CH is positioned in the area that corresponds to the target point TG1, a line-of-sight line LNV that connects the target point TG1 and the character CH (representative point of the character CH) is calculated. The direction of the line-of-sight line LNV is set to be the target line-of-sight direction of a virtual camera VC. Specifically, the virtual camera VC is controlled so that a line-of-sight direction VD of the virtual camera VC follows (approaches) the target line-of-sight direction along the line-of-sight line LNV A position along the line-of-sight line LNV at which the character CH is included within the field of view is set to be the target viewpoint position of the virtual camera VC. Specifically, the virtual camera VC is controlled so that a viewpoint position VP of the virtual camera VC follows the target viewpoint position behind the character CH.

In FIG. 18B, since the character CH is positioned in the area that corresponds to the target point TG2, the line-of-sight line LNV that connects the target point TG2 and the character CH is calculated. The direction of the line-of-sight line LNV is set to be the target line-of-sight direction of the virtual camera VC. A position along the line-of-sight line LNV at which the character CH is included within the field of view is set to be the target viewpoint position of the virtual camera VC. A similar process is performed when the character CH is positioned in the area that corresponds to the target point TG3.

According to the free-move mode camera control process shown in FIGS. 18A and 18B, the virtual camera VC is controlled so that the line-of-sight direction VD of the virtual camera VC aims at the target point TG1, TG2, or TG3 even when the player moves the character CH in the free-move mode. This allows the player to unconsciously move the character CH in the direction along the target point TG1, TG2, or TG3 in the free-move mode. This makes it possible to implement play modes that include the free-move mode and the battle mode while allowing the player to move the character CH so that the game develops as intended by the game producer. Moreover, since the route in which the character CH moves is specified, the map design and the area setting design can be facilitated.

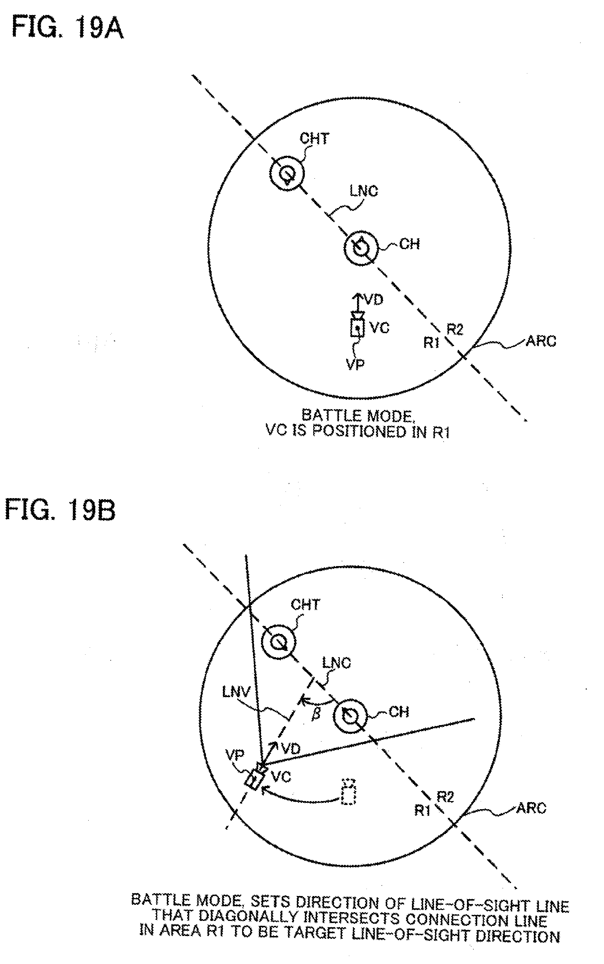

FIGS. 19A to 20B are views illustrative of the battle mode camera control process. In the battle mode camera control process, the direction of the line-of-sight line LNV that diagonally intersects a connection line LNC that connects the character CH and another character CHT is set to be the target line-of-sight direction of the virtual camera VC. A position along the line-of-sight line LNV at which the character CH and the other character CHT are included within the field of view is set to be the target viewpoint position of the virtual camera VC.

As shown in FIG. 19A, when an encounter event between the character CH and the other character CHT has occurred, a first area R1 and a second area R2 that are defined (divided) by the connection line LNC that connects the character CH and the other character CHT are specified. In FIG. 19A, the area situated on the left side of the connection line LNC is the first area R1, and the area situated on the right side of the connection line LNC is the second area R2, for example.

In FIG. 19A, the virtual camera VC is positioned in the first area R1 when the encounter event has occurred. In this case, the direction of the line-of-sight line LNV that diagonally intersects the connection line LNC in the first area R1 is set to be the target line-of-sight direction of the virtual camera VC (see FIG. 19B). Specifically, the direction (line-of-sight direction VD) of the virtual camera VC is rotated clockwise, and the line-of-sight line LNV is set along the direction that forms an angle β with the connection line LNC. The starting point of the line-of-sight line LNV is set at a position on the connection line LNC between the character CH and the other character CHT, for example.

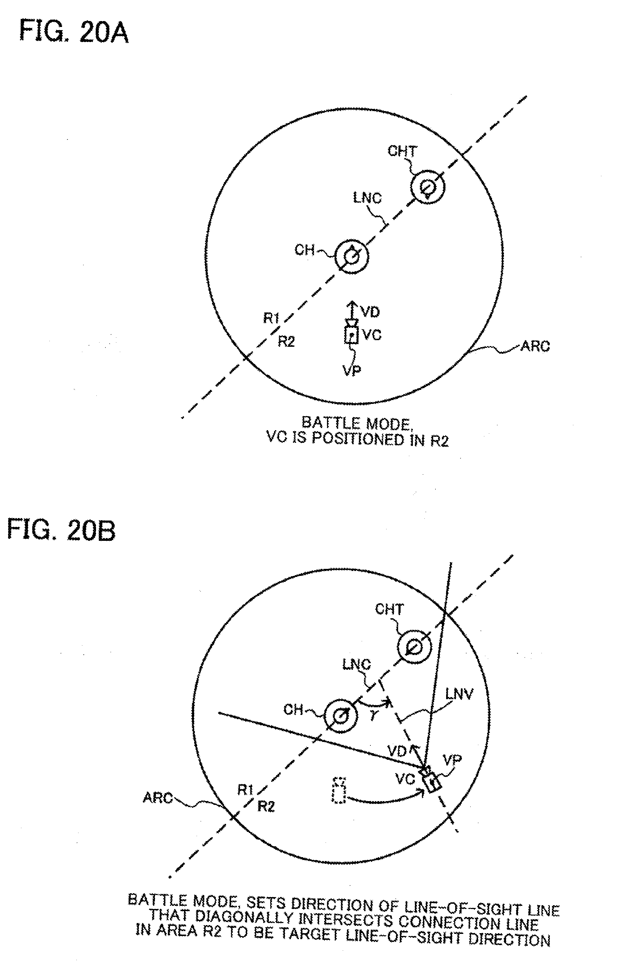

In FIG. 20A, the virtual camera VC is positioned in the second area R2 when the encounter event has occurred. In this case, the direction of the line-of-sight line LNV that diagonally intersects the connection line LNC in the second area R2 is set to be the target line-of-sight direction of the virtual camera VC (see FIG. 20B). Specifically, the direction of the virtual camera VC is rotated counterclockwise, and the line-of-sight line LNV is set along the direction that forms an angle γ with the connection line LNC. The starting point of the line-of-sight line LNV is set at a position on the connection line LNC between the character CH and the other character CHT, for example.

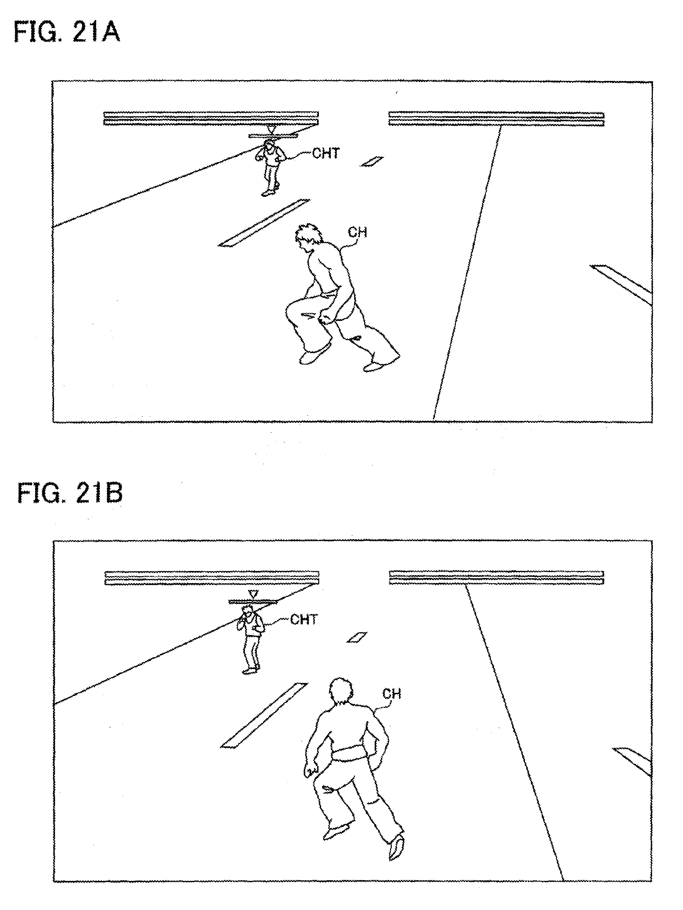

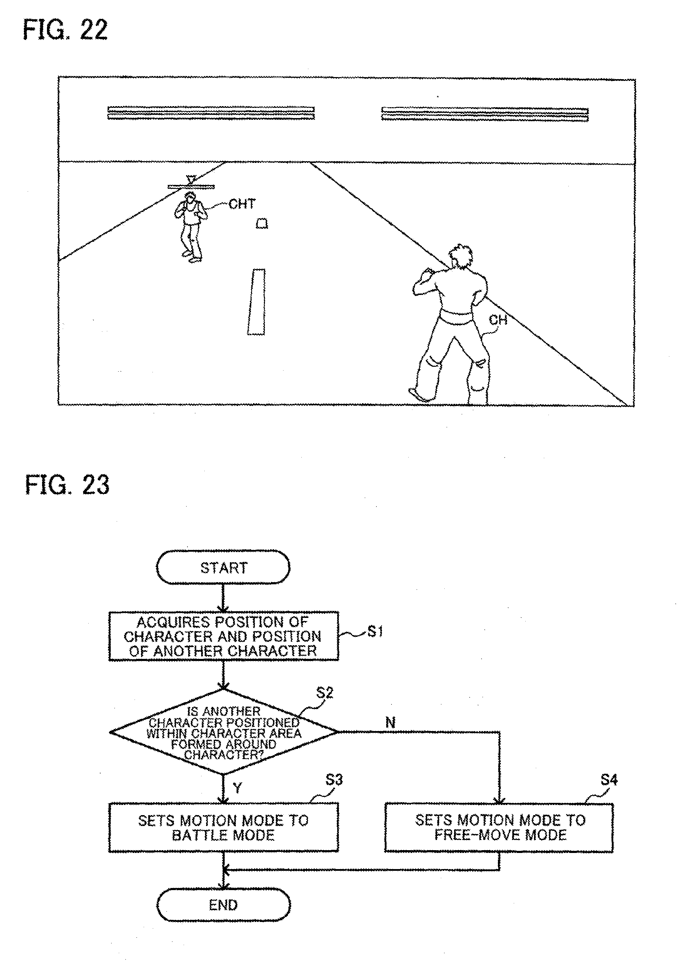

FIGS. 21A to 22 show examples of a game image that is generated when controlling the virtual camera VC as shown in FIGS. 19A and 19B. In FIG. 21A, the connection line LNC that connects the characters CH and CHT and the line-of-sight direction VD of the virtual camera VC form a small angle. In FIGS. 21B and 22, the direction of the virtual camera VC is rotated clockwise so that the angle formed by the connection line LNC and the line-of-sight direction VD is gradually increased. FIG. 22 shows an image in which the character CH and the other character CHT are included in the field of view when the line-of-sight direction VD forms an angle β with the connection line LNC. The player can thus enjoy a one-to-one battle between the character CH and the other character CHT.

FIGS. 4A to 5 show examples of a game image that is generated when controlling the virtual camera VC as shown in FIGS. 20A and 20B. In FIG. 4A, the connection line LNC and the line-of-sight direction VD form a small angle. In FIGS. 4B and 5, the direction of the virtual camera VC is rotated counterclockwise so that the angle formed by the connection line LNC and the line-of-sight direction VD is gradually increased. FIG. 5 shows an image in which the character CH and the other character CHT are included in the field of view when the line-of-sight direction VD forms an angle γ with the connection line LNC.

For example, when rotating the direction of the virtual camera VC counterclockwise in FIG. 19A, the virtual camera VC must be rotated by a large angle in order to generate a battle image in which the character CH confronts the other character CHT. Therefore, it may take time to generate the battle image, or an image inconvenient to the player may be generated due to rapid rotation of the direction of the virtual camera VC.

According to this embodiment, the direction of the virtual camera VC is rotated clockwise when the virtual camera VC is positioned in the first area R1 (see FIGS. 19A and 19B). Therefore, the rotation angle of the virtual camera VC required to generate the battle image shown in FIG. 22 can be reduced. This reduces the time required to generate the battle image shown in FIG. 22 while suppressing rapid rotation of the direction of the virtual camera VC.

According to this embodiment, the direction of the virtual camera VC is rotated counterclockwise when the virtual camera VC is positioned in the second area R2 (see FIGS. 20A and 20B). Therefore, since the rotation angle of the virtual camera VC required to generate the battle image shown in FIG. 5 can be reduced, the time required to generate the battle image shown in FIG. 5 can be reduced while suppressing rapid rotation of the direction of the virtual camera VC.

### 3. Specific process

An example of a specific process according to this embodiment is described below using flowcharts shown in FIGS. 23 to 25. FIG. 23 is a flowchart illustrative of the motion mode switch process according to this embodiment.

The position of the character and the position of another character are acquired (step S1). Whether or not another character is positioned within the character area formed around the character is then determined (see FIGS. 11A and 11B) (step S2). When another character is positioned within the character area, the motion mode is set to the battle mode (step S3). When another character is not positioned within the character area, the motion mode is set to the free-move mode (step S4).

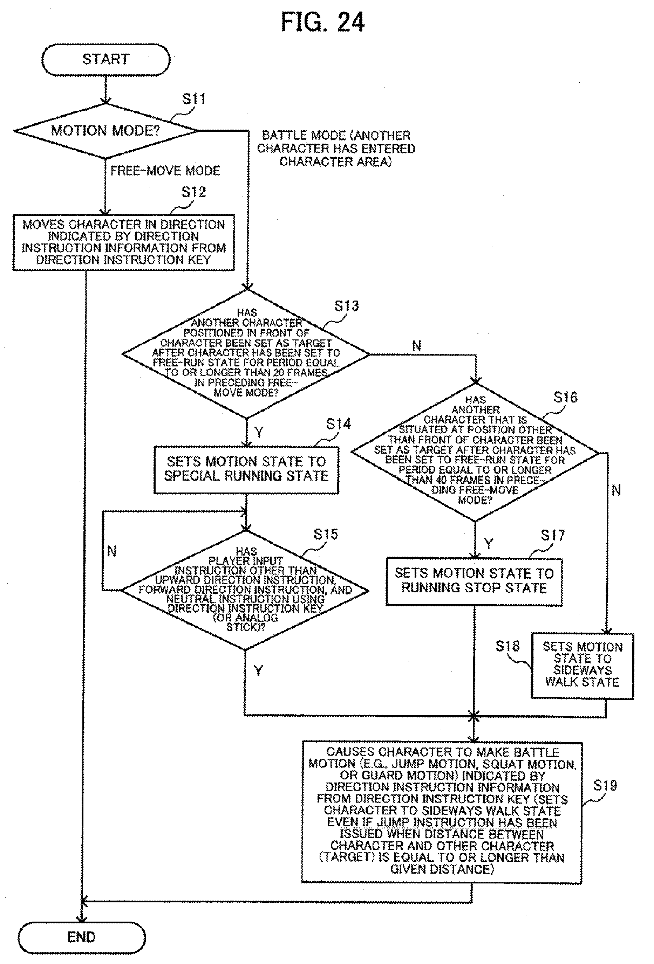

FIG. 24 is a flowchart illustrative of the character control process according to this embodiment.

Whether the motion mode is the free-move mode or the battle mode is determined (step S11). When the motion mode is the free-move mode, the character is moved in the direction indicated by the direction instruction information from the direction instruction key (see FIG. 8) (step S12).

When it has been determined that the motion mode is the battle mode in the step S11, whether or not another character positioned in front of the character has been set as the target after the character has been set to a free-run state (running state) for a period equal to or longer than 20 frames (given period) in the preceding free-move mode, is determined (step S13). Specifically, whether or not another character has appeared within a given angle range in front of the character and entered the character area (has been set as the target) in a state in which the player has continuously pressed the instruction button of the direction instruction key so that the character has been set to a free-run state for a period equal to or longer than 20 frames, is determined. When another character has been set as the target, the motion state of the character set to the battle mode is set to a special running state (step S14). The special running state is a motion state in which the character makes a normal running motion in the battle mode, but does not make a jump motion.

Whether or not the player has input an instruction other than the upward direction instruction, the forward direction instruction, and the neutral instruction using the direction instruction key is then determined (step S15). Note that the forward direction instruction corresponds to the rightward direction instruction when the other character is positioned on the right side of the character, and corresponds to the leftward direction instruction when the other character is positioned on the left side of the character. When the player has input such an instruction, the character is caused to make a battle motion (e.g., jump motion, squat motion, or guard motion) indicated by the direction instruction information from the direction instruction key (see FIG. 9) (step S19). Note that the character is caused to make a sideways walk motion (i.e., the character moves perpendicularly to the screen) instead of a jump motion even if the direction instruction information from the direction instruction section indicates a jump motion, when the distance between the character and the other character (target) is equal to or longer than a given distance.

When the determination result in the step S13 is "No", whether or not another character that is situated at a position other than the front of the character has been set as the target after the character has been set to a free-run state (running state) for a period equal to or longer than 40 frames (given period) in the preceding free-move mode, is determined (step S16). Specifically, whether or not another character has appeared at a position other than the front of the character and entered the character area (has been set as the target) in a state in which the character has been set to a free-run state for a period equal to or longer than 40 frames, is determined. When another character has been set as the target, the motion state of the character set to the battle mode is set to a running stop state (step S17). Specifically, the character is caused to stop the running state in the free-move mode. The character is then caused to make a battle motion indicated by the direction instruction information (step S19).

When the determination result in the step S16 is "No", the character is set to the sideways walk state (step S18). The character is then caused to make a battle motion indicated by the direction instruction information (step S19).

In the steps S13, S14, S16, and S17 shown in FIG. 24, the character is set to a given motion state when the character has been set to the free-run state (running state in a broad sense) for a period equal to or longer than a given period in the free-move mode, and the motion mode has then switched to the battle mode. Specifically, the character is set to the special running state in which the character does not make a jump motion (step S14), or set to the running stop state (step S17).

The character is caused to make a battle motion indicated by the direction instruction information from the direction instruction key after the character has been set to a given motion state (step S19).

For example, suppose that the player has caused the character to run by continuously pressing the upward direction instruction button 11 of the direction instruction key 10 in the free-move mode, and another character has appeared in front of the character so that the motion mode has been switched to the battle mode. In this case, since the player cannot accurately determine the switch timing at which the motion mode has been switched to the battle mode, it is likely that the player continuously presses the upward direction instruction button 11 immediately after the motion mode has been switched to the battle mode. In the battle mode, the upward direction instruction button 11 functions as a jump motion instruction button (see C2 in FIG. 9). Therefore, the character may make an unintentional jump motion when the motion mode has been switched to the battle mode so that the player may have a wrong or unnatural impression. When another character has appeared on the left side, the right side, or the like of the character when the character makes a free run in the free-move mode, the character may pass by and may not be able to battle the other character if the character continues running.

A situation in which the character makes an unintentional jump motion when the motion mode has been switched to the battle mode can be prevented by setting the character to the special running state in which the character does not make a jump motion (step S14). A situation in which the character passes by another character when the other character has appeared in an area other than the front of the character can be prevented by setting the character to the running stop state (step S17), so that the character can easily battle the other character.

The special running state set in the step S14 is the same as the normal running state in the battle mode, except that the character does not make a jump motion. Therefore, the player has an impression that the character is set to the normal running state in the battle mode. The player can cause the character set to the running state (running motion) to tackle the other character in the same manner as in the normal running state in the battle mode. Since the character does not make a jump motion in the special running state, a situation in which the character frequently makes a jump motion when the motion mode has been switched to the battle mode can be prevented.

When the character is set to the normal running state in the battle mode, the running state stops when the player has input a backward direction instruction or a downward direction instruction. Therefore, if the step S 19 is performed only when the player has input a backward direction instruction or a downward direction instruction (step S15), the step S19 can be performed without causing the player to have a wrong impression. Note that the given motion state that is set when the character has been set to a running state for a period equal to or longer than a given period in the free-move mode and the motion mode has then switched to the battle mode is not limited to the special running state (step S 14) and the running stop state (step S 17). For example, the character may be set to a guard state (guard motion) as the given motion state. This allows the character to confront another character in the guard state when the motion mode has been switched to the battle mode and the character has approached the other character.

The upward direction instruction in the battle mode may be considered to be a forward direction instruction perpendicular to the screen. Therefore, the character is set to the sideways walk state (i.e., the character moves in the forward direction perpendicularly to the screen) (step S18) without causing the character to make a jump motion when the player has pressed the upward direction instruction button 11 immediately after the motion mode has been switched to the battle mode. This implements a switch process that does not cause the player to have a wrong impression.

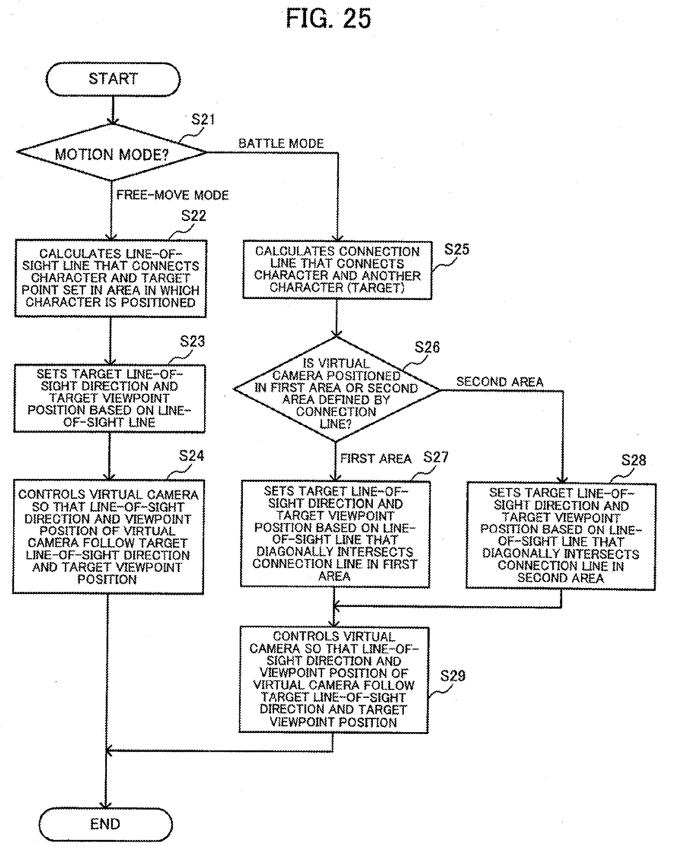

FIG. 25 is a flowchart illustrative of the virtual camera control process according to this embodiment.

Whether the motion mode is the free-move mode or the battle mode is determined (step S21). When it has been determined that the motion mode is the free-move mode, the line-of-sight line that connects the character and the target point that is set in the area in which the character is positioned is calculated (see FIGS. 18A and 18B) (step S22). The target line-of-sight direction and the target viewpoint position of the virtual camera are set based on the calculated line-of-sight line (step S23). The virtual camera is then controlled so that the line-of-sight direction and the viewpoint position of the virtual camera follow the target line-of-sight direction and the target viewpoint position (step S24).

When it has been determined that the motion mode is the battle mode in the step S21, the connection line that connects the character and another character (target) is calculated (see FIGS. 19A to 20B) (step S25).

Whether the virtual camera is positioned in the first area or the second area defined by the connection line is determined (step S26). When it has been determined that the virtual camera is positioned in the first area, the target line-of-sight direction and the target viewpoint position of the virtual camera are set based on the line-of-sight line that diagonally intersects the connection line in the first area (step S27). When it has been determined that the virtual camera is positioned in the second area, the target line-of-sight direction and the target viewpoint position of the virtual camera are set based on the line-of-sight line that diagonally intersects the connection line in the second area (step S28). The virtual camera is then controlled so that the line-of-sight direction and the viewpoint position of the virtual camera follow the target line-of-sight direction and the target viewpoint position (step S29).

Although some embodiments of the invention have been described in detail above, those skilled in the art would readily appreciate that many modifications are possible in the embodiments without materially departing from the novel teachings and advantages of the invention. Accordingly, such modifications are intended to be included within the scope of the invention. Any term cited with a different term having a broader meaning or the same meaning at least once in the specification and the drawings can be replaced by the different term in any place in the specification and the drawings. The motion mode switch process, the character control process, the target character selection process, the virtual camera control process, and the like are not limited to those described in connection with the above embodiments. Methods equivalent to the above methods are included within the scope of the invention. The invention may be applied to various games. The invention may be applied to various image generation systems such as an arcade game system, a consumer game system, a large-scale attraction system in which a number of players participate, a simulator, a multimedia terminal, a system board that generates a game image, and a portable telephone.

## Claims

1. An image generation system comprising:
a character control section that controls a character based on operation information from an operation section;
a virtual camera control section that controls a virtual camera;
an image generation section that generates an image viewed from the virtual camera in an object space; and
a motion mode switch section that switches a motion mode of the character,
the motion mode switch section switching the motion mode of the character from a free-move mode to a battle mode when an encounter event between the character and another character has occurred in the free-move mode, the free-move mode being a mode in which the character moves on a field in the object space, and the battle mode being a mode in which the character battles the other character; and
the character control section moving the character on the field in a direction indicated by direction instruction information from a direction instruction section of the operation section in the free-move mode, and causing the character to make a battle motion indicated by the direction instruction information from the direction instruction section in the battle mode.

2. The image generation system as defined in claim 1,
the character control section moving the character in a direction indicated by a direction instruction operation even in the battle mode when a given direction instruction operation has been performed using the operation section in the battle mode.

3. The image generation system as defined in claim 2,
the operation section including a second direction instruction section; and
the character control section moving the character in a direction indicated by direction instruction information from the second direction instruction section even in the battle mode when the second direction instruction section has been operated in the battle mode.

4. The image generation system as defined in claim 3,
the character control section moving the character in a direction indicated by the direction instruction information from the second direction instruction section when the second direction instruction section has been operated in the free-move mode.

5. The image generation system as defined in any one of claims 2 to 4,
the operation section including an operation switch section; and
the character control section moving the character in a direction indicated by the direction instruction information from the direction instruction section even in the battle mode when the direction instruction section has been operated in the battle mode in a state in which the operation switch section is operated.

6. The image generation system as defined in any one of claims 2 to 5,
the character control section controlling the character so that a moving speed of the character when the direction instruction operation has been performed in the battle mode is lower than the moving speed of the character in the free-move mode.

7. The image generation system as defined in any one of claims 1 to 6,
the character control section setting the character to a given motion state when the motion mode has been switched to the battle mode after the character has been set to a running state for a period equal to or longer than a given period in the free-move mode.

8. The image generation system as defined in claim 7,
the character control section setting the character to a special running state as the given motion state, the character not making a jump motion when the character is set to the special running state.

9. The image generation system as defined in claim 7,
the character control section setting the character to a running stop state as the given motion state.

10. The image generation system as defined in any one of claims 7 to 9,
the character control section causing the character to make the battle motion indicated by the direction instruction information from the direction instruction section after the character has been set to the given motion state.

11. The image generation system as defined in any one of claims 1 to 10,
the character control section causing the character to make a motion other than a jump motion in the battle mode even if the direction instruction information from the direction instruction section indicates the jump motion, when a distance between the character and the other character as a target is equal to or longer than a given distance.

12. The image generation system as defined in any one of claims 1 to 11,
the character control section causing the character to make a guard motion as the battle motion in the battle mode.

13. The image generation system as defined in any one of claims 1 to 12,
the character control section causing the character to make at least one of a forward motion, a backward motion, a jump motion, and a squat motion as the battle motion in the battle mode.

14. The image generation system as defined in any one of claims 1 to 13,
the motion mode switch section switching the motion mode of the character from the free-move mode to the battle mode when the other character has entered a character area set for the character.

15. The image generation system as defined in claim 14, further comprising:
a target character selection section that selects a target character that is an attack target from a plurality of other characters that are positioned within the character area.

16. The image generation system as defined in claim 15,
the target character selection section alternately selecting another character that is positioned closest to the character and yet another character that is positioned second closest to the character as the target character when a target switch section of the operation section has been operated.

17. The image generation system as defined in claim 15 or 16,
the operation section including a second direction instruction section; the character control section moving the character in a direction indicated by direction instruction information from the second direction instruction section even in the battle mode when the second direction instruction section has been operated in the battle mode; and
the target character selection section selecting another character that is positioned within a direction range that includes a direction indicated by the direction instruction information from the second direction instruction section as the target character.

18. The image generation system as defined in any one of claims 1 to 17,
the virtual camera control section performing a free-move mode camera control process in the free-move mode, and performing a battle mode camera control process in the battle mode.

19. The image generation system as defined in claim 18,
the virtual camera control section setting a direction of a line-of-sight line that connects a target point and the character to be a target line-of-sight direction of the virtual camera when the virtual camera control section performs the free-move mode camera control process.

20. The image generation system as defined in claim 19,
the virtual camera control section setting a position along the line-of-sight line at which the character is included within a field of view to be a target viewpoint position of the virtual camera when the virtual camera control section performs the free-move mode camera control process.

21. The image generation system as defined in any one of claims 18 to 20,
the virtual camera control section setting a direction of a line-of-sight line that diagonally intersects a connection line that connects the character and the other character to be a target line-of-sight direction of the virtual camera when the virtual camera control section performs the battle mode camera control process.

22. The image generation system as defined in claim 21,
the virtual camera control section setting a position along the line-of-sight line at which the character and the other character are included within a field of view to be a target viewpoint position of the virtual camera when the virtual camera control section performs the battle mode camera control process.

23. The image generation system as defined in claim 21 or 22,
the virtual camera control section determining whether the virtual camera is positioned in a first area or a second area when an encounter event between the character and the other character has occurred, the first area and the second area being defined by the connection line that connects the character and the other character,
the virtual camera control section setting the direction of the line-of-sight line that diagonally intersects the connection line in the first area to be the target line-of-sight direction of the virtual camera when the virtual camera is positioned in the first area when the encounter event has occurred, and
the virtual camera control section setting the direction of the line-of-sight line that diagonally intersects the connection line in the second area to be the target line-of-sight direction of the virtual camera when the virtual camera is positioned in the second area when the encounter event has occurred.

24. An image generation system comprising:
a character control section that controls a character based on operation information from an operation section;
a virtual camera control section that controls a virtual camera;
an image generation section that generates an image viewed from the virtual camera in an object space; and
a motion mode switch section that switches a motion mode of the character,
the motion mode switch section switching the motion mode of the character from a free-move mode to a battle mode when an encounter event between the character and another character has occurred in the free-move mode, the free-move mode being a mode in which the character moves on a field in the object space, and the battle mode being a mode in which the character battles the other character; and
the virtual camera control section performing a free-move mode camera control process in the free-move mode, and performing a battle mode camera control process in the battle mode,
the virtual camera control section setting a direction of a line-of-sight line that connects a target point and the character to be a target line-of-sight direction of the virtual camera when the virtual camera control section performs the free-move mode camera control process, and
the virtual camera control section setting a direction of a line-of-sight line that diagonally intersects a connection line that connects the character and the other character to be a target line-of-sight direction of the virtual camera when the virtual camera control section performs the battle mode camera control process.

25. An image generation method comprising:
controlling a character based on operation information from an operation section;
controlling a virtual camera to generate an image viewed from the virtual camera in an object space;
switching a motion mode of the character from a free-move mode to a battle mode when an encounter event between the character and another character has occurred in the free-move mode, the free-move mode being a mode in which the character moves on a field in the object space, and the battle mode being a mode in which the character battles the other character;
moving the character on the field in a direction indicated by direction instruction information from a direction instruction section of the operation section in the free-move mode; and
causing the character to make a battle motion indicated by the direction instruction information from the direction instruction section in the battle mode.

26. An image generation method comprising:
controlling a character based on operation information from an operation section;
controlling a virtual camera to generate an image viewed from the virtual camera in an object space;
switching a motion mode of the character from a free-move mode to a battle mode when an encounter event between the character and another character has occurred in the free-move mode, the free-move mode being a mode in which the character moves on a field in the object space, and the battle mode being a mode in which the character battles the other character;
performing a free-move mode camera control process in the free-move mode, and performing a battle mode camera control process in the battle mode;
setting a direction of a line-of-sight line that connects a target point and the character to be a target line-of-sight direction of the virtual camera when performing the free-move mode camera control process; and
setting a direction of a line-of-sight line that diagonally intersects a connection line that connects the character and the other character to be a target line-of-sight direction of the virtual camera when performing the battle mode camera control process.

27. A computer program product storing a program code that causes a computer to execute the information generation method as defined in claim 25 or 26.
